# EUROPEAN PATENT SPECIFICATION

(11) **EP 1 839 380 B1**
(45) Date of publication and mention of the grant of the patent: **13.11.2013**
(21) Application number: 06718152.9
(22) Date of filing: 11.01.2006
(51) Int. Cl.: H02G 3/04, H02G 3/06, H02G 3/10, H02G 3/00, H02G 3/30

(54) **MODULAR RACEWAY WITH BASE AND INTEGRAL DIVIDER**
MODULARE KABELKANAL MIT BASIS UND INTEGRALEM TEILER
CHEMIN DE CÂBLES MODULAIRE AVEC BASE ET DIVISEUR INTÉGRAL

(30) Priority: 13.01.2005 US 35477; 30.12.2005 US 322707
(43) Date of publication of application: 03.10.2007
(73) Proprietor: THE WIREMOLD COMPANY, West Hartford, CT 06110 (US)
(72) Inventor: MAKWINSKI, Mark, Cromwell, Connecticut 06416 (US); PICARD, Richard, R., West Hartford, Connecticut 06107 (US); HEMINGWAY, Jeffrey, Burlington, Connecticut 06013 (US); STEMPINSKI, Shawn, Wethersfield, CT 06109 (US)
(74) Representative: Schumacher & Willsau
(86) International application number: PCT/US2006/001042
(87) International publication number: WO 2006/076466

(56) References cited:
- US-A- 594 998
- US-B1- 6 259 020
- US-B1- 6 259 020
- US-B1- 6 284 975
- US-B1- 6 284 975
- US-B1- 6 384 336
- US-B1- 6 664 467
- US-B1- 6 936 766

## Description

This invention relates generally to a modular raceway system according to the preamble of claim 1.

Such a raceway system is known from the document US 6,284,975 B1 as a tee assembly for use between horizontal raceway sections and a vertical raceway and has a divider that separates the cables running between separate wireways in these raceways. The divider has ramps to guide fiber optic cables around generous radii, and is also reversible to lend a degree of flexibility to the divider.

The document US 6,259,020 B1 discloses a compartmentalized electrical outlet box which defines side-by-side forwardly open compartments for receiving power leads, data lines and telecommunication cables from inside a wall structure. These leads will be connected to corresponding conductors in a raceway that has at least two separated wireways defined in a base channel which is E-shaped in cross section. Access openings are provided in staggered relationship at the rear wall of the raceway channel so as to be aligned with the compartments in the outlet box.

The present invention relates specifically to a modular raceway system having raceway base components of predetermined length designed to be mounted to a wall structure, or to be received by wall brackets provided at predetermined intervals along a wall structure. Raceway wall brackets and/or couplers at the adjacent end portions of the raceway base components, are designed to take advantage of a unique cross section of the raceway base and provide a continuous enclosed structure for the power and/or data cabling in divided, or separated wireways, defined in part by an integrally formed divider in the base.

According to the present invention the modular raceway system of the kind initially referred to comprises the features of the characterizing part of claim 1.

The modular raceway system according to the present invention has a T-shaped raceway base configuration. Preassembly of the raceway base and associated covers allows for modular use at installation, and also allows for fitting of the raceway to internal wall structures of a building without the need for custom cutting of the raceway base, such as now required with raceway systems of the type available from The Wiremold Company of West Hartford, Connecticut under their "3000" or "4000" two piece metal raceway designations.

Still another feature of the modular raceway system according to the present invention is a unique configuration of the raceway covers whereby separate raceway covers are provided for each of the two wireways defined in part by the T-shaped base components. The cover components are generally L-shape in cross section and have end portions designed to mate with the forward or leading edge of the integrally formed divider defined in the base, and to mate as well with the longitudinally extending marginal upper and lower edges of the base. Upper and lower cover components are mounted to the base, and offer flexibility in the placement of power and data/communication outlet devices in one or the other or in both of these cover components.

Further embodiments of the present invention form the subject matter of the dependent claims which include a unique geometry for individual device brackets designed for use in the L-shaped raceway covers. More particularly, each individual device bracket has an L-shaped frame, with flanges that are received by projecting lips on the forward or leading edge of the divider in the T-shaped base. Each individual device bracket further includes a socket in the other leg of the L-shaped device bracket that mates with marginal free edge in the divider, or stem of the T-shaped raceway base. As a result of the unique design for a modular raceway as outlined above, outlet devices can be provided in the upper or lower wireways and need not be provided one above the other. Outlet devices and/or data communication devices can also be provided in the downwardly facing surface of the lower L-shaped raceway cover in a somewhat hidden, and better protected position then prior art raceways provided for these device brackets, and the connectors that plug into the devices. This location for the outlet devices contributes to an aesthetically pleasing appearance for a modular raceway system constructed and installed in accordance with the present invention.

### BRIEF DESCRIPTION OF DRAWINGS

Fig. 1 is an exploded perspective view showing the various components of a first embodiment of the present invention relative to a wall structure.
Fig. 2 is an exploded view of the components of the present invention as adapted for use in a modular raceway system that not only includes preassembled cables in the various raceway sections, but also including prewired electrical outlet devices in the lower raceway.

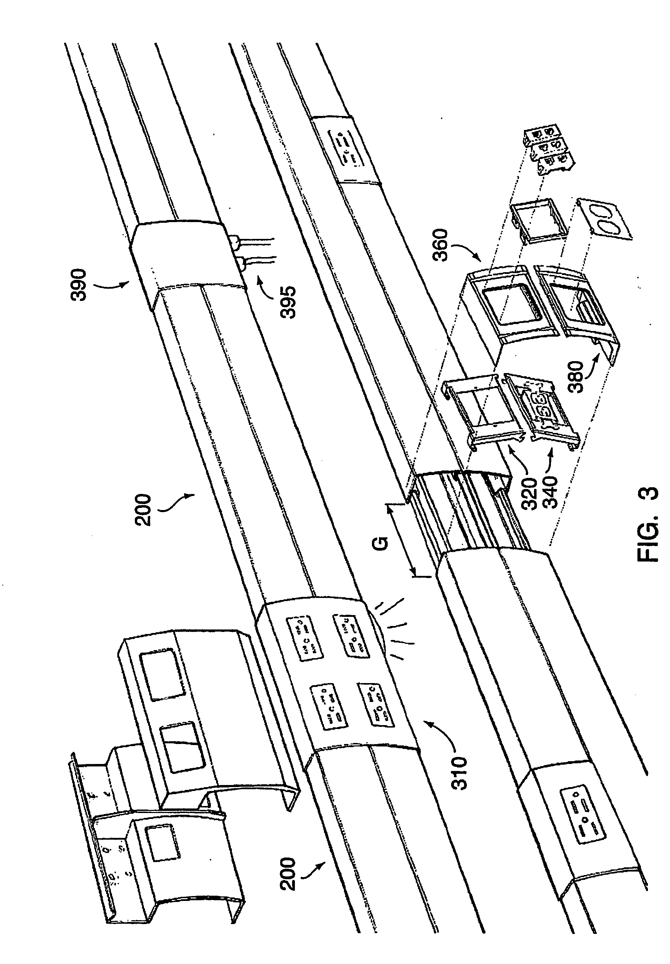

Fig. 3 illustrates the raceway components of the present invention taking advantage of the downwardly open receptacles in the lower raceway, as well as the staggered mounting for outlet devices in the upper and lower raceway covers. Also shown in Fig. 3 is an alternative arrangement where the outlet devices are clustered at a single location in the raceway. This alternative embodiment illustrates a raised device box to provide additional through-put for the cabling in the wireways defined by the raceway base and cover in accordance with the present invention. Fig. 3 also illustrates in exploded relationship the geometry of device brackets and device bracket "covers" such as are suitable for use in a raceway of the type disclosed herein.
Fig. 4 shows in several schematic views the advantage to providing predetermined length raceway base sections together with brackets for supporting these raceway base sections, to mount on a wall structure of varying length, yet with the same raceway components. This view also illustrates the lines of weakening provided in the raceway base to achieve somewhat shorter raceway sections for wall lengths that require less than these "minimum length" raceway sections.
Fig. 5 is an assembly view illustrating the use of modular raceway in accordance with the present invention in a particular installation and illustrates the various internal and external elbows, T-shapes, and flat elbow configurations necessary to provide a complete installation in a particular building environment
Fig. 6 shows another alternative installation for running raceway of the present invention around an obstacle or column, and/or around an existing conduit or other smaller obstacle in the path of the raceway.
Fig. 7 shows in exploded relationship the various components required to install outlet device brackets in the lower wireway of a raceway in accordance with the present invention.
Fig. 8 shows in cross section the assembly of the components illustrated in Fig. 7.
Fig. 9 shows in perspective view the assembled components of Fig. 8.
Fig. 10 is an end view of an L-shaped device bracket for assembly with the T-shaped base between aligned cover components associated with the top or upper wireway.
Fig. 11 is a top perspective view of the device bracket shown in Fig. 10.
Fig. 12 is a rear perspective view of the device bracket of Figs. 10 and 11.
Fig. 13 is an exploded perspective view of an alternative design for a device bracket with a downwardly facing outlet device and enclosure and escutcheon components for assembly therewith.
Fig. 14 is an exploded rear quartering perspective view of the device bracket and associated components.
Fig. 15 is a bottom view of the assembled components from Figs. 13 and 14.

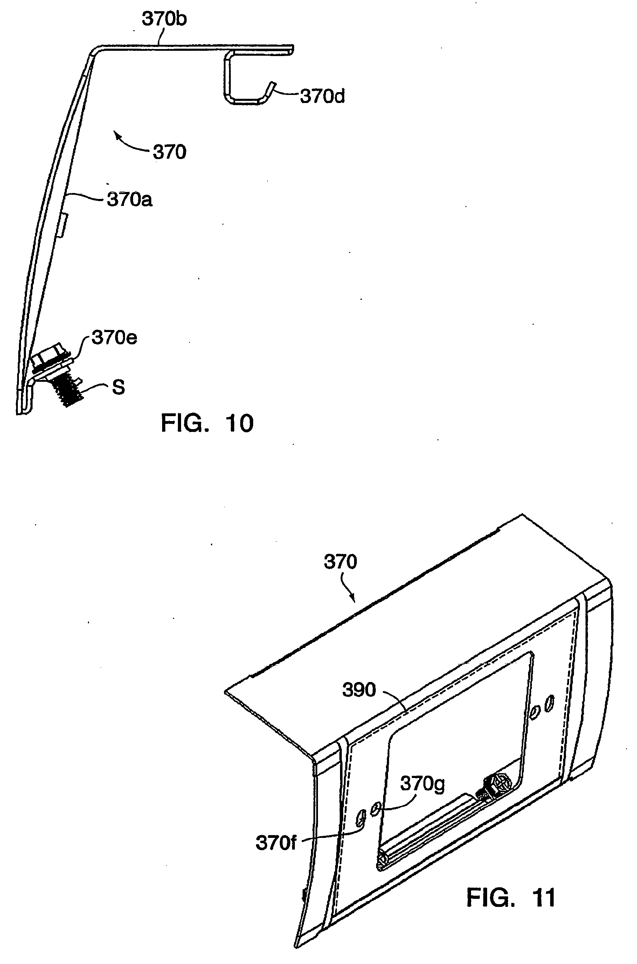

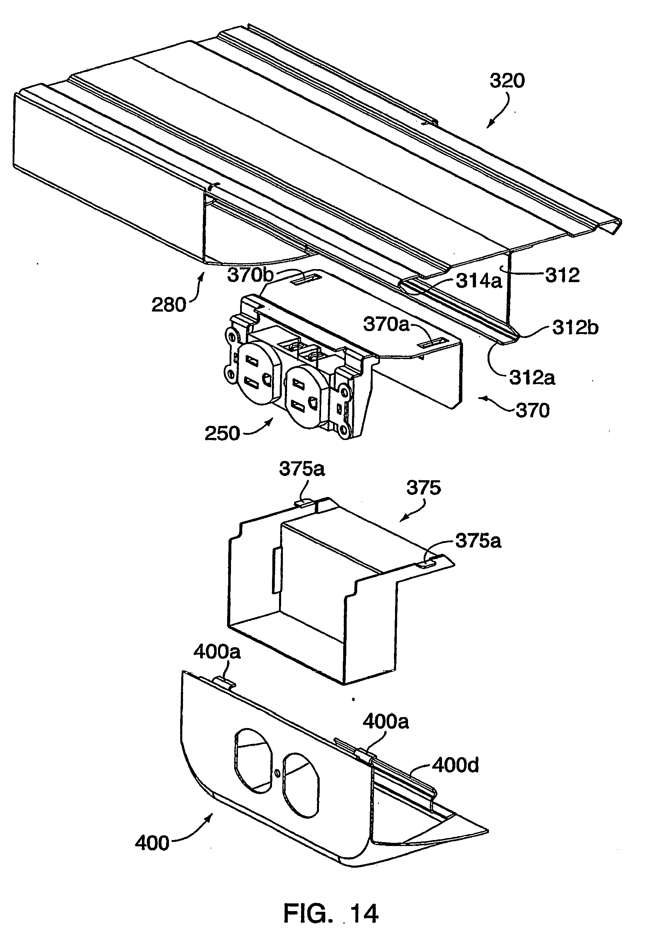

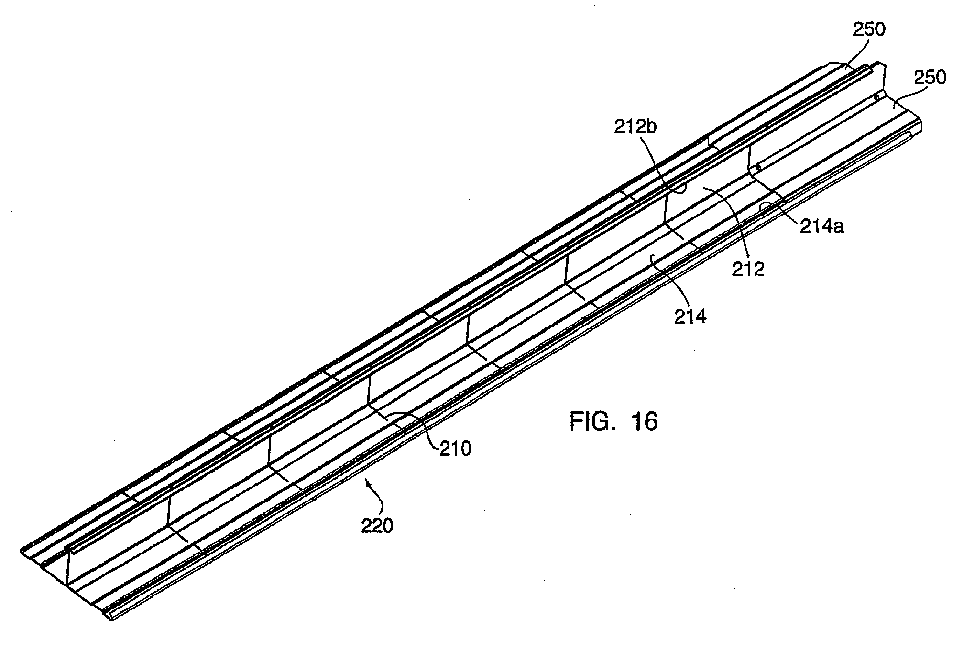

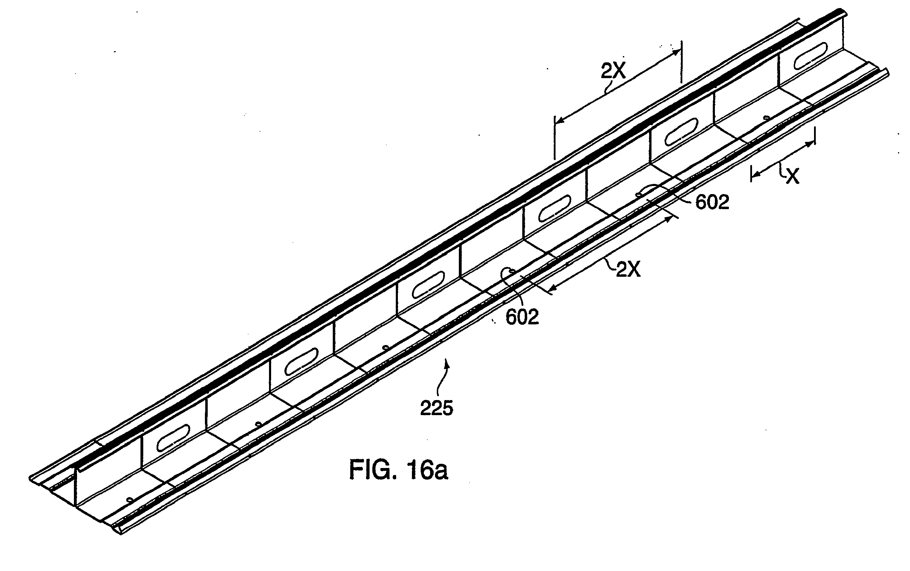

Fig. 16 shows a T-shaped raceway base 200 having an integrally formed divider, and the same lines of weakening provided at predetermined intervals. Raceway covers (not shown) can be shaped into assembly with the base as described above. To join aligned raceway base components to one another at installation, couplers 250, 250 are shaped into the wireway defining walls of the T-shaped base as shown in Fig. 14 which shows the couplers 250, 250 secured into the raceway base 200. Note the openings 250a, 250a for receiving screw fasteners (not shown) but similar to those shown in reference to Fig. 10 at 5, 5. Covers 260 and 280 cooperate with the T-shaped base 220 to define separate wireways for the power and data/communication cables.
Fig. 16a shows a T-shaped base 225 having spaced lines of weakening, and alternately arranged knock-out openings in the web, and in the base for mounting to a wall structure. The knock-out openings provide access for wiring between wireways.
Fig. 17 is a vertical section through an assembled base 200 and cover pair 260 and 280, with a pair of raceway couplers 250, 250 snapped into the raceway base for holding adjacent base members in alignment.
Fig. 17a shows a preferred one piece raceway base construction.
Fig. 17b is a view of Fig. 17a base assembled as in Fig. 17.
Fig. 18 is a perspective view of two aligned raceway sections 200, 200 that are joined by a transition fitting, and bridging or linking one wireway with another raceway of smaller capacity.
Fig. 19 is an exploded perspective view of some of the assembled components provided between the assembled raceway sections of Fig. 18.
Fig. 20 is an exploded perspective view similar to Fig. 19, but without the raceway sections, and shows the raceway couplers provided in the top and bottom wireways defined by the raceway base plate and the raceway covers.
Fig. 21 shows two aligned raceway sections and a transition fitting similar to that shown in Figs. 18, 19 and 20, but instead of providing access to wiring from and to another raceway 2000, the fitting 2002 serves to bridge raceway 2000 without any cross feeding of cables or wires.
Fig. 22 shows the Fig. 21 assembly, but without the raceway covers in one base plate, and without the transitions fitting cover.
Fig. 23 shows the Fig. 21 assembly, but without the raceway base and covers, to better illustrate the unique coupling means comprising two L-shaped coupling elements arranged alongside one another an coextensively with respect to the spine (not shown) of the raceway base.
Figs. 24 - 26 show a raceway cover component, such as described above, having an L-shape and mounted on a raceway base to and from a wireway. The cover has cutouts to receive additional plugs similar to those sold by The Wiremold Company.
Fig. 27 shows the lower raceway cover component 270a with prewired outlets 275a in the lower wall of the cover, rather than in the forward wall as depicted in Figs. 25 and 26.
Fig. 28 is a view of the T-shaped raceway base with one of the knockout openings being separated from the T-shaped base divider wall.
Fig. 29 is a view similar to Fig. 28, but illustrating a grommet provided in the knockout opening after removal of the knockout.
Fig. 30 is a top perspective view of the device bracket and associated outlet devices mounted in the lower wire-way, defined below the divider wall, and illustrates several cross over cable provided through the knockout opening and connected to the outlet devices.
Fig. 31 is a front elevation, and illustrates the device bracket Fig. 30 assembled with the outlet devices of Fig. 30, together with an enclosure or shroud secured to the device bracket.

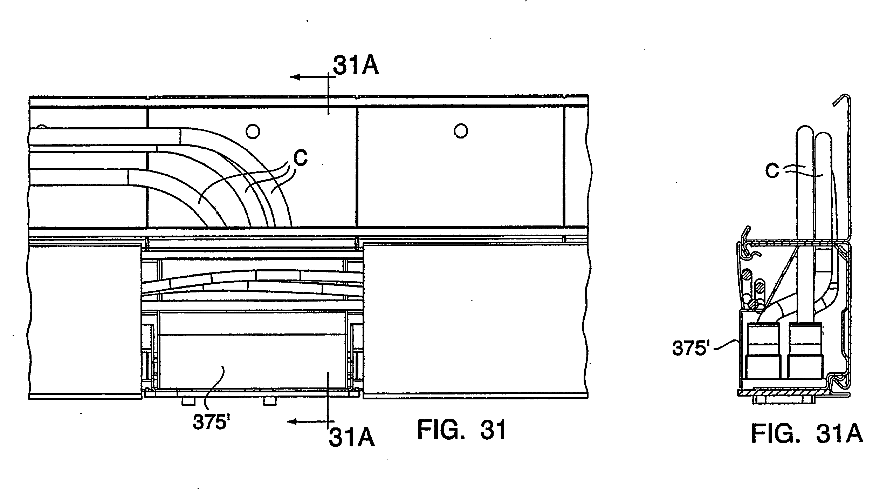

Fig. 31A-A is a sectional view taken on the line A-A of Fig. 31.

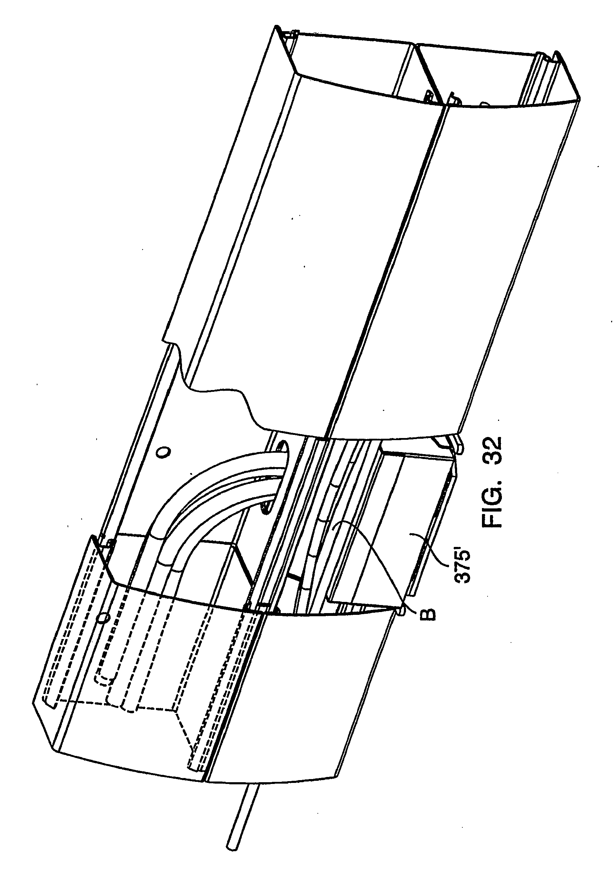

Fig. 32 illustrates the bypass feature of the enclosure, allowing cables in the lower wire-way to bypass the shrouded outlet device in its downwardly facing orientation in the lower wire-way.

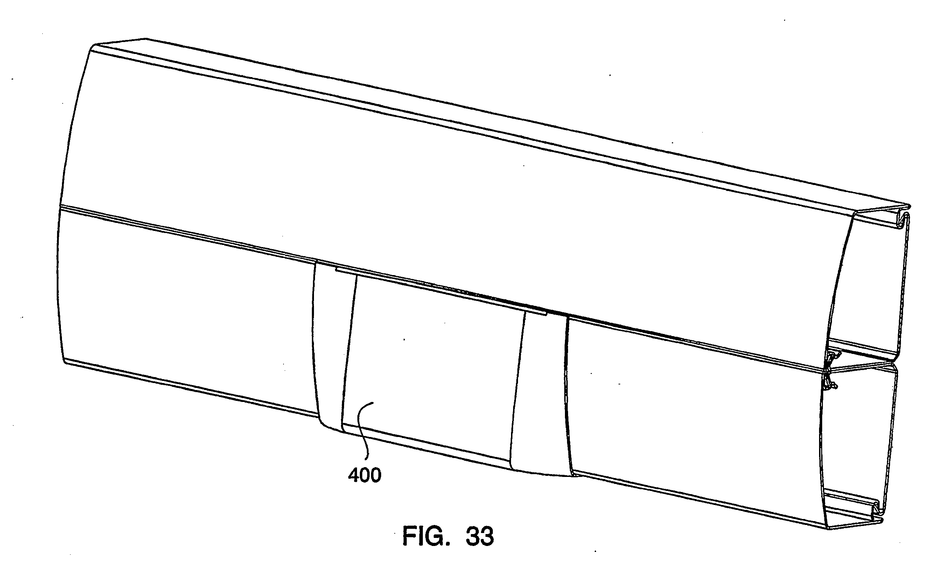

Fig. 33 is a view similar to Fig. 32, but illustrating the generous radius of curvature provided for the cables in the upper wire-way to transition through the opening in the divider wall, and between inside of the enclosure and the device bracket into the space defined between the enclosure and the device bracket itself.

### DETAILED DESCRIPTION

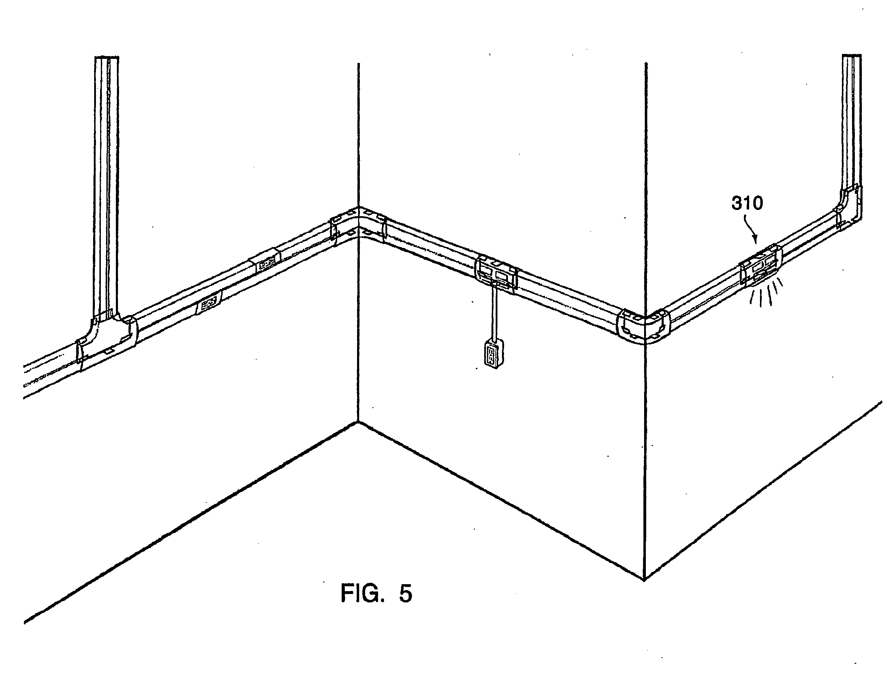

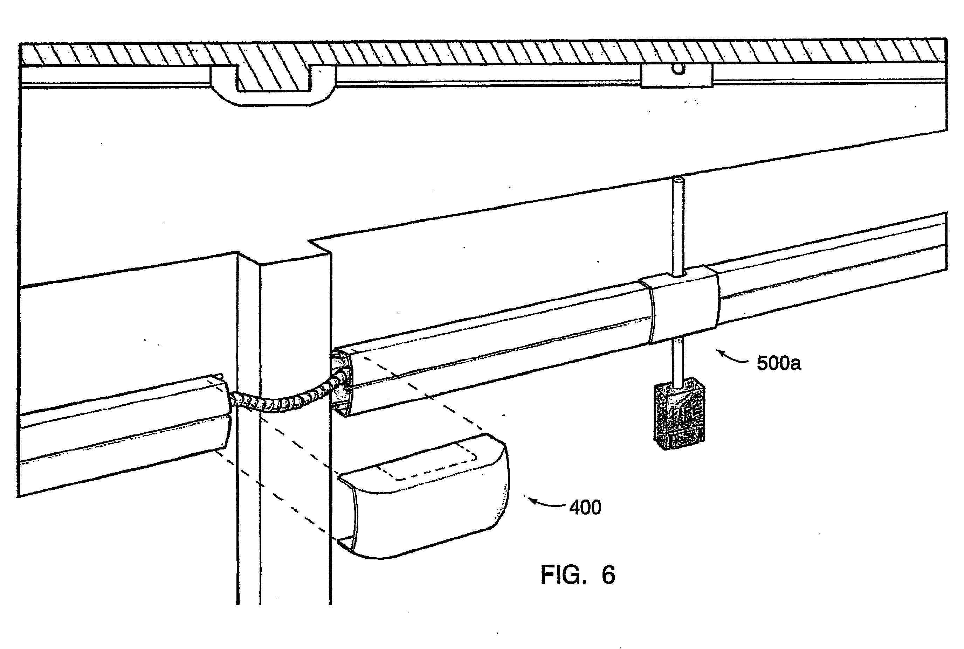

Turning now to the drawings in greater detail, a wall structure is indicated generally at W1 and W2, defining a corner which is internal as shown, to represent the environment where a raceway of the present invention can be provided. See for example, Figs. 5 and 6 where both internal and external corners are illustrated, and where drop down raceway segments are provided for bringing electrical cables to the raceway.

In accordance with the first embodiment of the present invention, a modular raceway is provided, and includes standard length raceway sections of length L that can be secured to the walls W1 or W2, by wall brackets as indicated at 100, 100a. Corner brackets can be fabricated from these unique wall brackets 100, as indicated at 101. Thus, the corner bracket 101 may comprise individual brackets fabricated from the wall brackets 100, 100a, to form a.comer bracket 101. It will also be apparent that this same approach can be used to form a corner bracket that can be utilized at an external corner.

A feature of the present invention is that raceway assemblies 200, 200 are of standard length (L) preferably between 1,22 - 2,44 m (4-8 feet), and are prewired. Thus, these raceway assemblies can be assembled with these mounting brackets so as to leave a gap G between the end portions thereof. The internal wiring for each raceway assembly can be filled with connectors (not shown) or conventionally connected by wire nuts or the equivalent. The gap G can be closed by a short raceway slip cover member 300, which is of U-shape, and has an internal contour to fit over the external contour of the raceway covers in the assemblies 200, 200, and to overlap these assemblies as shown in Fig. 3 for example. Alternatively, the gap G in the raceway assemblies 200, 200 can be used to provide an obstacle clearance component such as shown at 400 and 500 in Fig. 6. More generally, this gap G can be utilized to accommodate T-fittings, outlet device brackets and slips covers, internal and external elbows, and flat elbows, all as shown in Fig, 5.

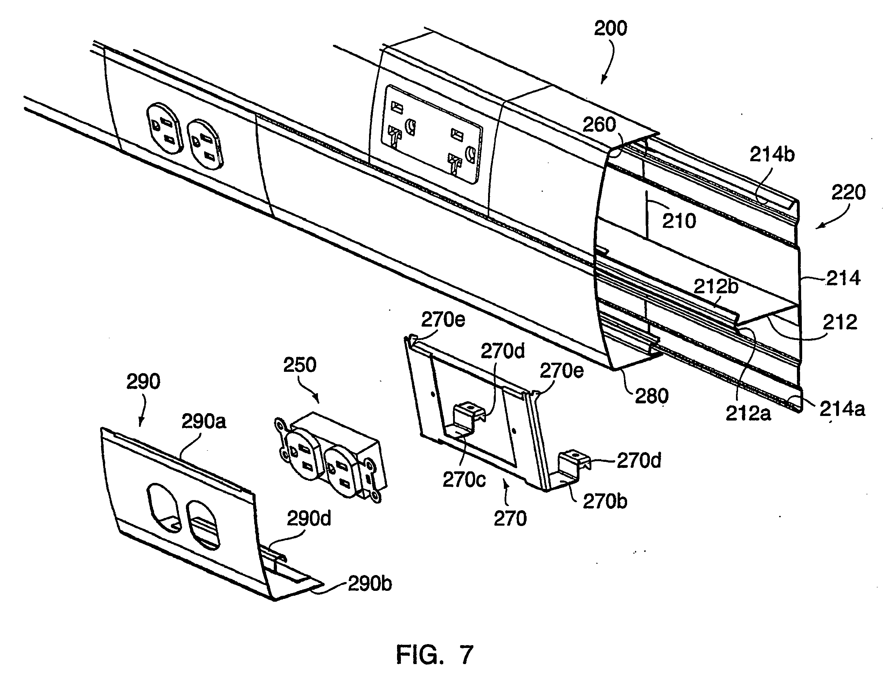

The raceway assemblies 200, 200 comprise a T-shaped base component such as shown at 220 in Fig. 7, plus two raceway cover components 260 and 280, each being of L-shape and snapped into the base 220 as suggested in Fig. 7: This configuration allows outlet devices to be placed at any location in the raceway assembly, and in either one or both of the upper and lower covers. Fig. 7 shows one outlet device for assembly in the front wall of the lower wireway between spaced apart raceway cover components (one shown at 280).

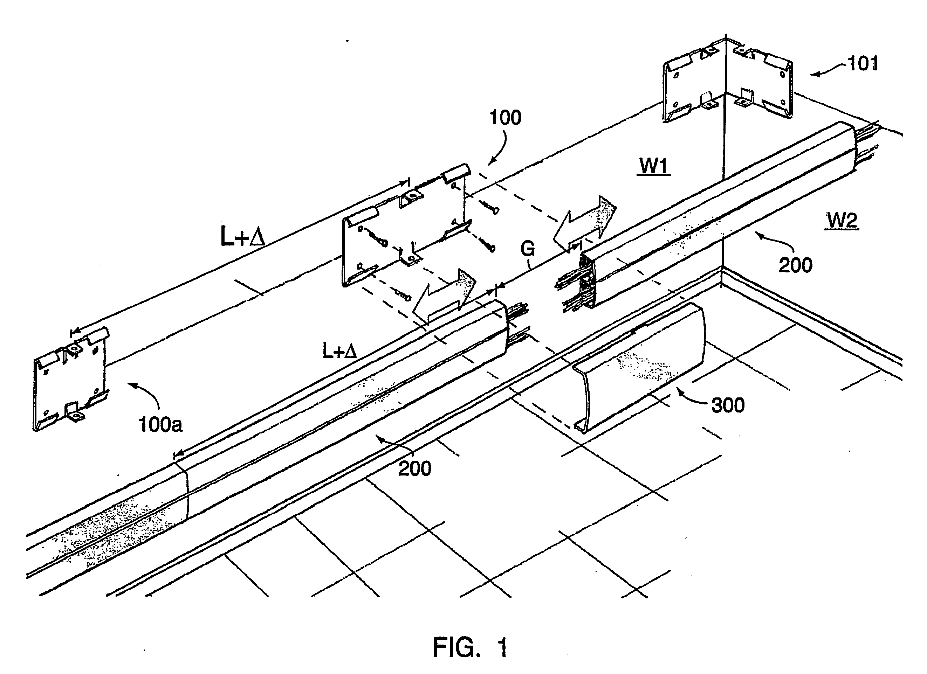

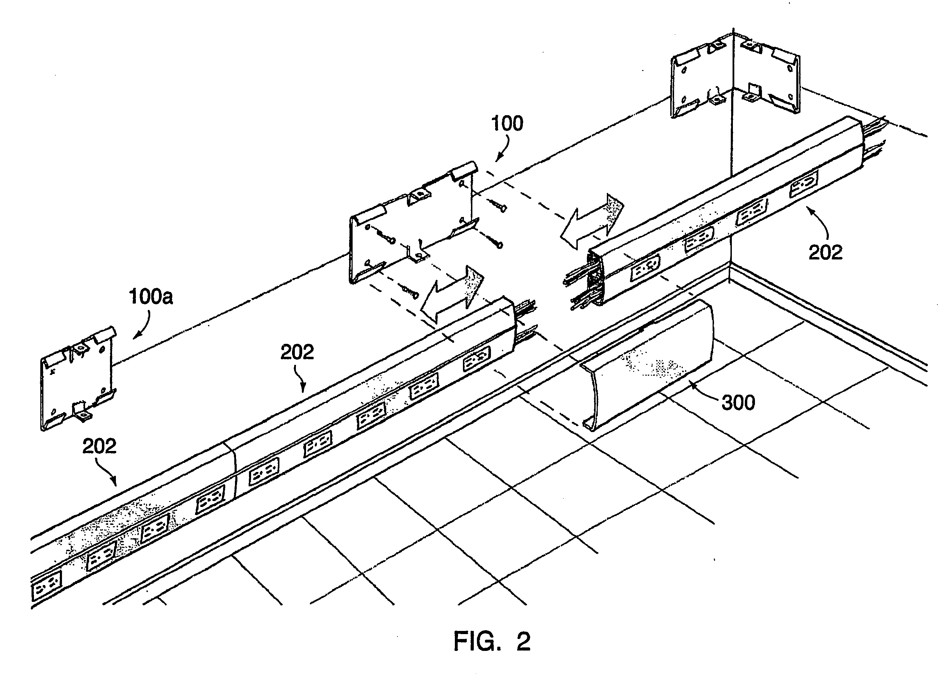

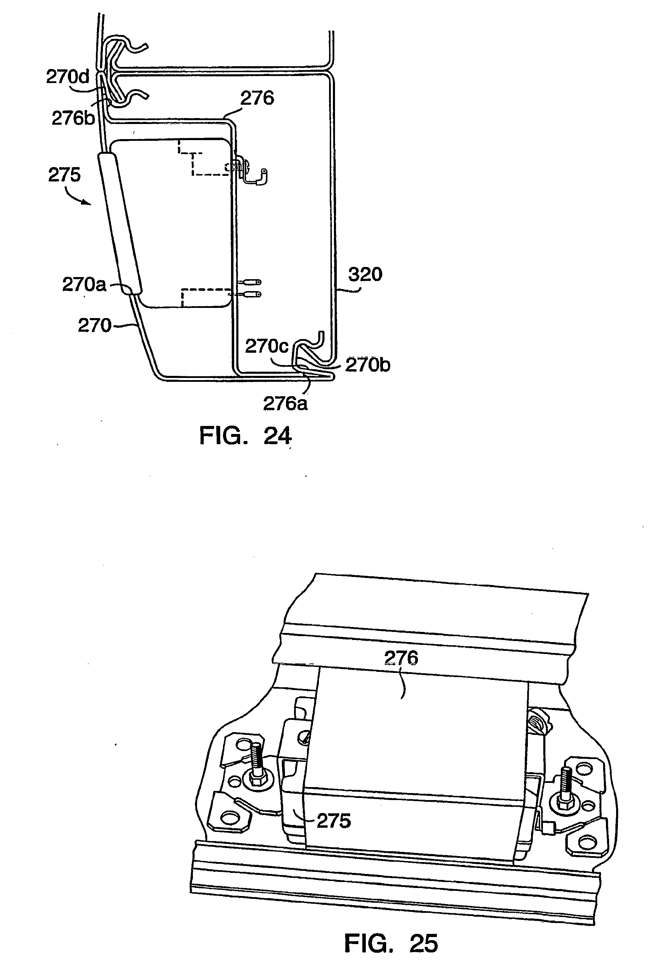

Fig. 2 shows the same components as depicted in Fig. 1 except that the raceway assemblies 202 are not only prewired, but are also fitted with prewired outlet devices. Prewired raceway of this type is available, but not in with an L-shaped cover used with a T-shaped raceway base to achieve the results set forth herein. Figs. 24-26 show this assembly in greater detail and will be described in greater detail below.

Turning next to a detailed description of Fig. 3, various configurations for mounting outlet devices are illustrated for use with a raceway assembly constructed in accordance with the present invention. For example in the gap G between adjacent raceway assemblies 200, 200 an assembly similar to that shown at 310 in Fig. 5 can be installed providing a multitude of outlet devices, including a "down light". As a result of the unique L-shaped configuration for the raceway covers, it is possible to provide outlets in the downwardly facing side wall of the lower raceway cover.

Individual device brackets for both the upper and lower wireways defined in the raceway of the present invention are indicated generally at 320 and 340 in Fig. 3 each being designed to accommodate a device such as an outlet plug. A cover or half cover is provided for each of these device brackets, and the upper cover may include a frame to accommodate data ports while the lower half cover may include a snap in outlet device plate or the outlet device plate can be provided in one piece with the half cover as described hereafter.

Still with reference to Fig. 3, and in locations where the adjacent raceway assembly end portions abut, so as to provide a continuous back plane for the raceway in a manner to be described, a somewhat shorter raceway coupling slip cover 390 can be fitted as shown. Furthermore, the opportunity for providing downwardly facing outlet devices permits power cabling such as indicated at 395 to be hidden from view and to be protected from the environment. This location for outlet plugs provides power leads 395 in a protected area below the raceway, and between the raceway and the floor.

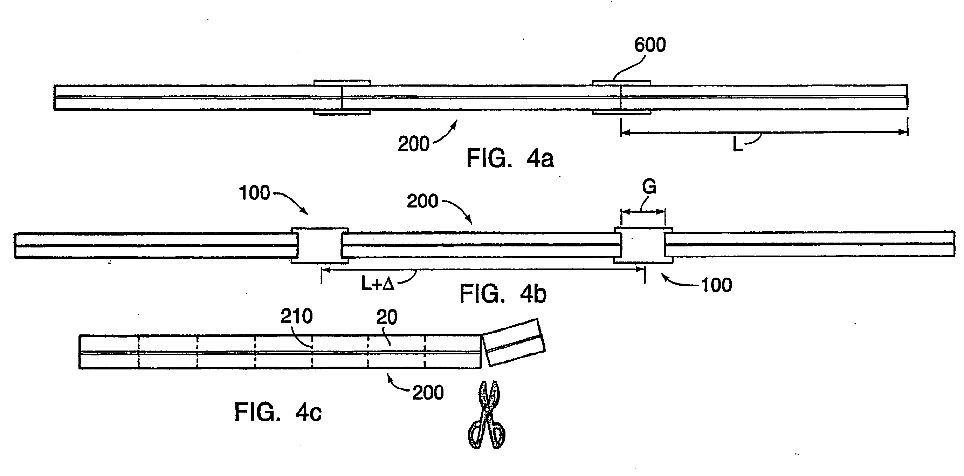

Fig. 4 illustrates the flexibility of raceway assemblies constructed in accordance with the present invention, and shows in somewhat schematic fashion the support brackets 100 together with aligned raceway assemblies 200, 200 that in the top view are shown in abutting relationship, and in the middle view in spread relationship so as to provide a gap G between the end portions of the adjacent aligned raceway assemblies 200. The bottom view in Fig. 4 illustrates a feature of the raceway base of the present invention whereby lines of weakening 210, 210 are provided incrementally along the length L of the raceway base. As a result of this configuration three standard length (L) raceway segments 200, 200, of 2,44 m (eight foot) in length for example, can be used to accommodate either a 24 foot span of wall, or can be expanded to provide an extra one foot four inches along the wall as a result of the gaps G provided between each of the raceway assemblies. The scoring of the eight foot raceway sections in predetermined increments allows even more variation in the overall raceway length that can be accommodated with a minimum of installation effort.

In a preferred embodiment, to be described with reference to Fig. 16a these lines of weakening are only 4 inches apart as shown at "X". A more convenient fit to the convention stud spacing (406,4 mm (16 inches) or 609,6 mm (24 inches)) in conventional wall structures can be achieved with the pre-punched base plate mounting holes 209, 209 spaced 25,8 mm (2 inches) from every other line of weakening "X/2" providing a mounting hole spacing of "2X". The same spacing "2X" is provided between the knock-out openings in the web portion of the T-shaped base as shown in Fig. 16a. Finally, the slip covers, 300 for example, are preferably half again as long as the spacing X, or 1.5 times X (152,4 mm (6 inches)) for the preferred 101,6 mm (4 inches) spacing of the lines of weakening 210, 210 in the preferred embodiment

It is noted here that installers of present day raceway must use precision cutting tools that are designed to sever a rather heavy gage steel raceway base, that is generally of U-shape. Often times the cut is not square, or otherwise of sufficient precision to satisfy either UL requirements, or the installer/customer's needs.

Although present day covers for use with conventional U-shaped raceway base configurations can be conveniently cut because they are flat, the flanges on the back side of the these covers can lead the installer to uneven cuts, resulting in an imperfect raceway installation. Even the untrained eye can be expected to pickup defects such as these. The present invention effectively obviates or at least minimizes the opportunity for such imperfections.

The purpose then of the present invention is to provide a unique raceway system that is not only of modular construction as mentioned above, but that also includes a raceway base which is provided with conveniently located lines of weakening 210 as described above with reference Fig. 4. Such a raceway system leads to greater flexibility in the location of outlet devices in the one wireway associated with the power leads, and in the adjacent wireway associated with the data/telecom cabling. See for example in Fig. 3 where the "activations" for both power and data can be accommodated "anywhere" along the length of the individual wireways rather than requiring all "activations" to be provided in an oversized multipurpose installation such as illustrated at 310 in Fig. 3. Such an installation is possible in the present raceway system.

Turning next to Fig. 7, and in accordance with the present invention, a modular raceway system of the present invention comprises elongated raceway base plates 220 having the lines of weakening such as indicated generally at 210 in Fig. 7. Each base plate includes a forwardly projecting web portion 212 formed integrally with the back plate 214, either by spot welding or in the event the material is suitable by extrusion. This T-shaped base configuration gives rise to advantages not available in more conventionally shaped raceway base structures. As mentioned above, 4 inches spacing of these lines of weakening 210, 210 is preferred. Pre-punched holes 2. inches from these lines of weakening also contributes to efficiency during installation.

In prior art raceways, of the type made from rolled steel for example, the raceway covers span the opening defined by a U-shaped base. See for example the two piece steel raceway available from The Wiremold Company of West Hartford, Connecticut under their 6000 and 4000 style two piece metal raceway. The present invention on the other hand provides a raceway base plate that is of T-shape cross section such that the forwardly projecting web portion defines a divider 212 between two adjacent wireways, that are further defined by separate wireway covers 260, 280. This configuration allows these raceway covers 260 and 280 to be preassembled, or separately assembled with the raceway base 214, and consequently provides opportunity for the placement of outlet devices in staggered locations along the raceway as suggested in Fig. 7. Installing individual outlet devices, in one or the other of these separate wireways provides an advantage over the prior art two piece metal raceways.

Still with reference to Fig, 7, the covers 260 and 280 are preferably identically configured, and the corresponding wireways also of equal cross-sectional area or volume. The lower raceway cover 280 is shown to be coextensive in length with that of the upper raceway cover 260 in Fig. 7, but this equivalency is not required. Each cover component can be of any length. Thus, individual outlet devices associated with each of these raceways can be provided in staggered relationship along each wireway so the raceway assembly can take a variation of forms as shown in Fig. 3 and Fig. 7.

Turning now to a more detailed description of the several ways in which outlet devices can be mounted in the raceway assembly, L-shaped device bracket 270 is shown in Fig. 7, and includes an opening 270a for receiving an outlet device, such as indicated generally at 250. The L-shaped device bracket 270 includes rearwardly extending lower portions 270b and 270c, which have spaced apart end portions 270d that are identically formed so as to be received on the angled flange 214a that extends the full length of the raceway base 214. These socket defining portions 270d of the L-shaped device bracket 270 are received by the flange 214a and allow the installer to pivot or snap the device bracket 270 in place, and in assembled relationship with the downturned lip 212a of the divider 212 on the raceway base. The device bracket 270 also has inwardly bent flanges that define end portions 270e, 270e provided specifically for this purpose.

It will be apparent that the L-shaped device bracket 270 can be configured to receive outlet devices such as that shown at 250. Outlet devices of different configuration, as for example data/communication jacks, can also be provided in the device bracket 270, and mounted in the upper wireway defined between the raceway base 214 and cover 260. A downwardly inclined flange 214b on the raceway base 214 cooperates with the upturned flange 212b on the divider wall 212 for this purpose. Since both wireways are preferably identical, the same device bracket 270 can be assembled in both the upper wireway, and the lower wireway.

Still with reference to Fig, 7, a cover plate 290 is adapted to fit over the outlet device 250 and is fitted to the raceway itself even as does the device bracket. This cover plate overlaps the cover segments 260/280. The cover plate 290 like the device bracket 270 is also of L-shape, and includes a rearwardly projecting wall 290b, having a socket shaped end portion or flange 290d, which is adapted to engage the aforementioned flange 214a of the raceway base. The flange 290a fits between the socket portions 270d, 270d on the device bracket 270. As so constructed and arranged the cover plate 290 can be assembled over the device bracket by providing this socket flange 290d in the space between the leg portions 270b, 270c of the device bracket, and pivoting the cover 290 in place over the outlet device 250. The upper marginal edge 290a is so constructed as to be received between the portions 270e of the device bracket as assembled with the base flange 212a. A secure assembly is provided for the outlet device 250. Steel material is preferably selected for fabrication of the raceway base and covers and provides continuity or grounding throughout the assembly of a raceway constructed in accordance with the present invention. So too the device bracket 270 is also fabricated from an electrically conductive metal material.

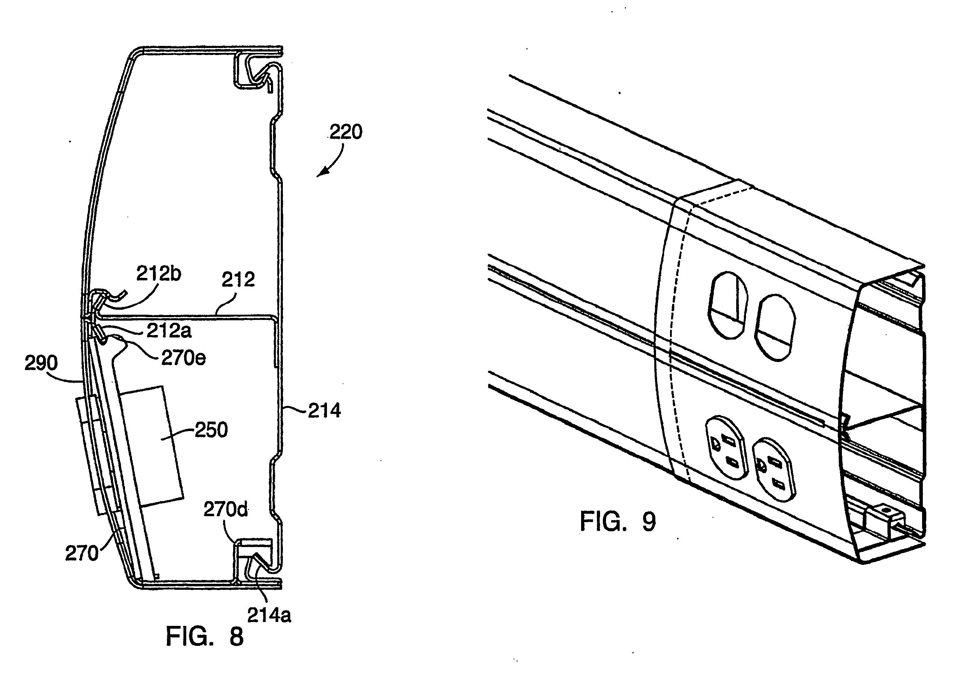

Fig. 8 shows in cross-section the assembly described in the proceeding paragraphs, and illustrates the interlocking arrangement provided for between the raceway base flange 214a and the socket defining end portions of the rearwardly projecting legs 270d of the device bracket. Also shown in Fig. 8 is the rearwardly projecting portion 270e of the device bracket which cooperates with the angled marginal edge 212a of the divider 212. The bracket cover 290 has openings, best shown on Fig. 7, for receiving the outlet device 250. The outlet device itself maybe secured to the device bracket 270, preferably by conventional screw fasteners (not shown).

Although the staggered relationship between the devices in the upper and lower wireways illustrated in Fig. 7 is an advantage of the present invention, it will be apparent from Figs. 7, 8 and 9 that outlet devices can be stacked one above the other in a conventional configuration. Thus, the raceway system of the present invention has all of the advantages of prior art systems, and has added advantages over prior art raceway systems.

Figs. 10, 11 and 12 illustrate a device bracket 370 of slightly different geometry. The device bracket 370 is designed to accommodate a more conventional cover plate 390. The rectangularly shaped conventional, cover plate 390 characteristic of present day outlet device cover plates generally, can be fastened to the device bracket 370 as suggested by the broken lines of Fig. 11. As shown in Fig. 10, the device bracket 370 has a socket defining portion 370d formed on the inner top side of the L-shaped bracket and this side 370b is oriented at an angle so as to form the L-shape with respect to the device bracket wall 370a, that will accommodate the outlet device itself.

Fig. 11 illustrates the device bracket 370 of Fig. 10 in a front top perspective view, with the outline of a conventional cover plate 390 being illustrated in broken lines to show how the device bracket 370 accommodates both the outlet device and the conventional cover plate. Suitable openings are provided adjacent to the outlet device opening in the device plate 370 for receiving both the screws associated with a conventional outlet plug, and other style cover plates associated with raceways of non-metal.

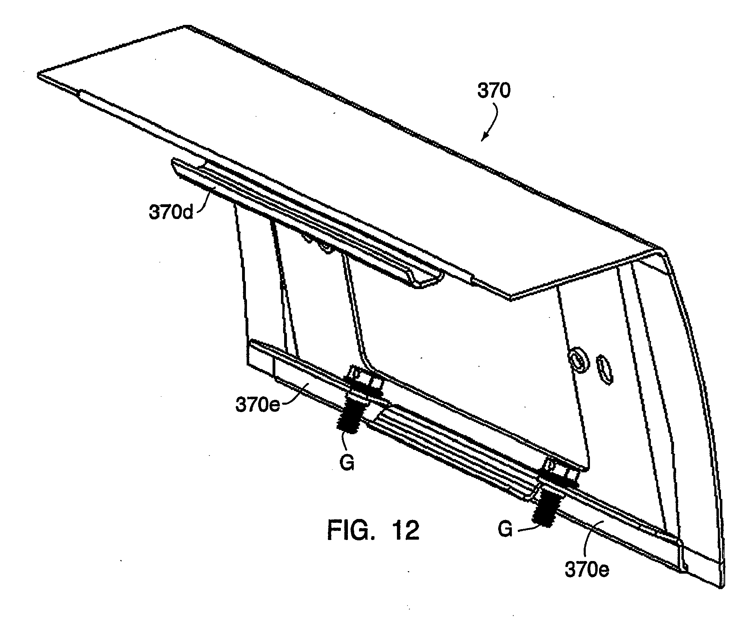

Still with reference to the device bracket 370 of Fig. 12, illustrates the shortened socket portion 370d of the device bracket 370 which engages the downturned flange portion 212a of the divider 212 in the base 214 of the raceway. A rearwardly projecting flange 370e provided on the lower edge of the device bracket of Fig. 12 engagements the flange 214 on the marginal edge of the web of the raceway base. Grounding screws S, S are provided to securely anchor the device bracket 370 in place, and to serve as a continuity or grounding connection as between the device bracket 370 and the raceway cover of the raceway assembly.

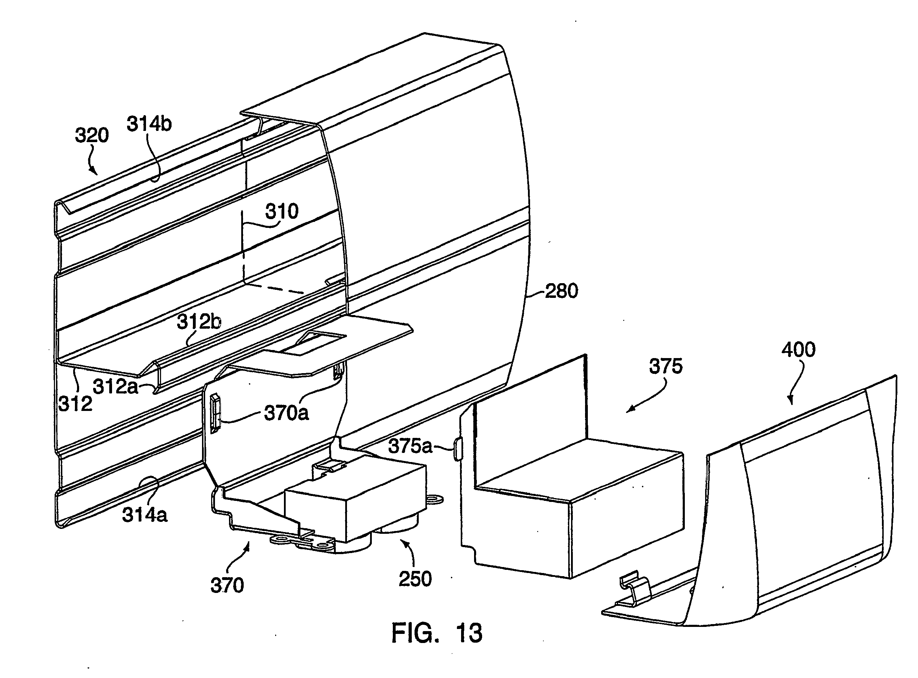

Figs. 13, 14 and 15 show still another version of outlet device bracket, one that also allows the device to be mounted between raceway cover components in the raceway assembly in order to provide the outlet plug at a location that does not detract from the overall appearance of the raceway assembly itself. More particularly, the device bracket 250 is so mounted that the outlet device faces downwardly, affording the opportunity to hide both the outlet plugs itself from view, and to make the wires from and to that plug much less noticeable than is the case with present day outlet device equipped raceway of the surface or wall mounted type.

Fig. 13 also shows a slightly modified configuration for the divider 312 in the raceway base 320, the raceway base being otherwise similar to that described previously, and having marginal edges 314a and 314b defined along the marginal edges of the base, and having angled portions 312a and 312b defined along the free end portion of the web or divider 312. Thus, the raceway base 320 is quite similar to that described previously with reference to the raceway base 220 and preferably includes lines of weakening such as shown at 310 in Fig. 13 and mounting holes (not shown). It will be apparent that device brackets of the type described previously with reference to Fig. 7 and Figs. 10-12 inclusively can also be used with this alternative raceway base plate 320 of Fig. 13.

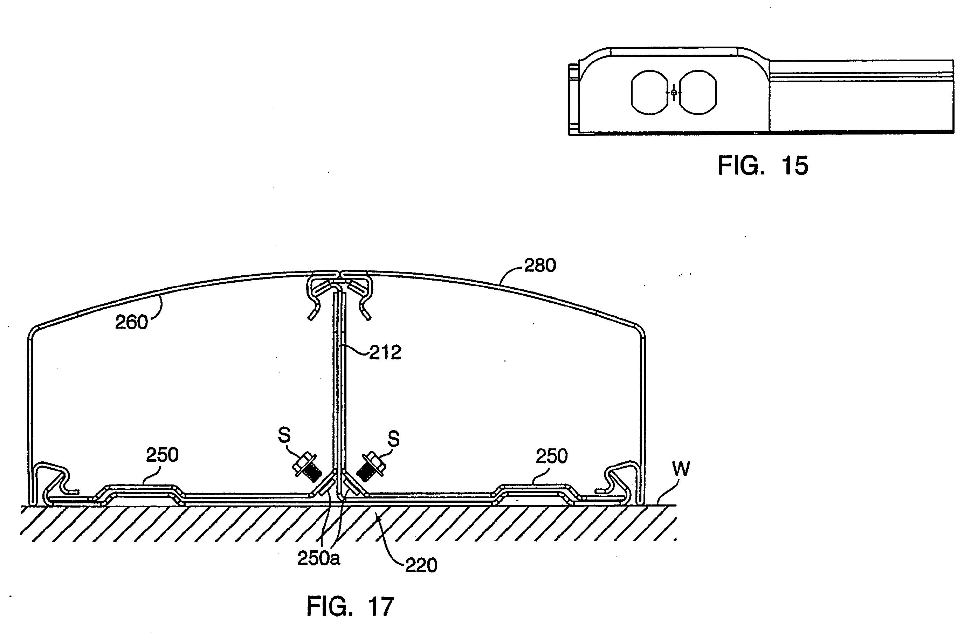

In order to take advantage of a downwardly facing outlet plug 250 such as shown in Fig. 13. A unique configuration is provided for the device bracket. The device bracket 370 of Fig. 13 is shown in exploded relationship to the raceway base, whereas in Fig 15 the device bracket is shown in an assembled relationship with the raceway base, and with a raceway cover is also shown assembled with that raceway base in Fig. 15.

With reference to Fig. 13, the device bracket 370 can be seen to have a generally U-shaped configuration, the lower legs of the U being spaced apart to receive the outlet device 250. The upper legs of the U are oriented parallel to these lower legs, and are provided alongside the divider 312. The outlet device 250 and it's device bracket 370 are isolated from the lower wireway by a retaining box 375 mounted on the device bracket 370. These components are held in assembled relationship by the ears 375a on box 375 that cooperate with slots 370a in the device bracket for this purpose. Retaining box 375 not only affords protection for the connections made with the outlet plug 250 at assembly, but also serves to define a protective passageway that will accommodate wiring running through the lower wireway in the raceway assembly.

Fig. 14 shows these components from below, as adapted to be assembled with the raceway base 320 to be provided between spaced raceway covers 280. The cover plate 400 serves as an escutcheon plate for the downwardly facing outlet plug 250. The socket portions 400a and 400d, provided at the ends of the L-shaped cover 400 allow snap-in assembly of the cover 400. More particularly these socket portions fit onto the flanges 312a and 314a of the base 312. The cover plate 400 is designed to accommodate the outlet device 250, but other configurations (not shown) can be fabricated to accommodate other types of electrical devices, such as jacks or down lights as shown in Fig. 5.

By way of summary and with reference to Figs. 13, 14 and 15, it will be apparent that raceway assemblies fitted with an outlet device plate in the downwardly facing wall of the raceway present an architecturally pleasing raceway appearance as this configuration obscures the outlet plug from view. Thus, the eye of the observer does not pick up such locations for the outlet plugs as readily as with conventional raceways generally. Further, the electrical cords that will be later plugged into such downwardly facing outlets located in the lower wall of the raceway are also obscured from view giving rise to an improved appearance for the space serviced the raceway of the present invention, as compared to conventional raceways generally.

In addition this configuration puts the plug in a more protected environment Whereas conventional present day raceways include a base component of generally U-shape with vertically spaced top and bottom boundaries or walls formed integrally with a generally flat base which is mounted to the wall, the provision for outlet devices in that lower wall is virtually precluded, or at least rendered difficult, by virtue of the fact that the wall is integral with the base. In the T-shaped raceway base plate of the present invention, on the other hand no bottom wall is required, and the bottom wall of the raceway is instead defined by the cover, leading to greater flexibility for locating outlet devices. More particularly, the cover's L-shape cross section affords opportunity for mounting downwardly facing device brackets, and brackets for other purposes such as lights, without requiring any cutting away of the raceway base. Therefore, the raceway design of the present invention affords not only a more aesthetically pleasing appearance to the observer, but also provides for functional advantages not readily available with raceway configurations currently available.

As previously described with reference to Fig. 4, raceway mounting plates can be provided at spaced intervals along a wall and preassembled raceway assemblies of predetermined length can be secured to these mounting plates to leave a gap between the adjacent end portions of the aligned raceway base plates. Thus, these mounting plates serve as coupling means to provide a continuation of the rear boundary of the upper and lower wireways so that the wireways need not be defined by the wall, but as instead defined by the metal covers and these metal mounting plates at least in the areas of these gaps. As mentioned previously, the lines of weakening in the raceway base plates facilitates the installation process in that the precise cutting of the raceway base (required with present day U-shaped two piece metal raceway generally) is rendered unnecessary, and the installer can instead make rough cuts or simply break apart the raceway base at a line of weakening.

It is also a feature of the present invention that these raceway base plate components can be assembled directly to the wall without requiring mounting plates. In order to provide another form of coupling means, to form a continuation of the metal back plane for the wireways defined by these aligned L-shaped raceway base components the present invention contemplates individual coupling wireway elements, in the form of the couplings shown at 250, 250 in Fig. 16. Fig. 16 shows a raceway base plate 220 of T-shape cross section having a plurality of score lines 210, 210 in the manner described previously with reference to Fig. 4. In lieu of the mounting plates shown in Fig. 4, coupling means, in the form of elements 250, 250 are snapped into place between the projecting T-shaped web 212 and the rear wall 214 of the raceway base 220. More particularly, the marginal edges of each coupling member or element 250 is received between the lip 212b at the free end portion of the web 212, and the longitudinally extending marginal edge 214a of the back portion of the raceway base. See Fig. 16 for details on the preferred form for the T-shaped raceway 225. Note the spacing X between the lines of weakening, and that between the knock out openings 2X and mounting holes 2X. X is preferably a division of 16 and 24 and 4 inches has been found to be a suitable spacing X.

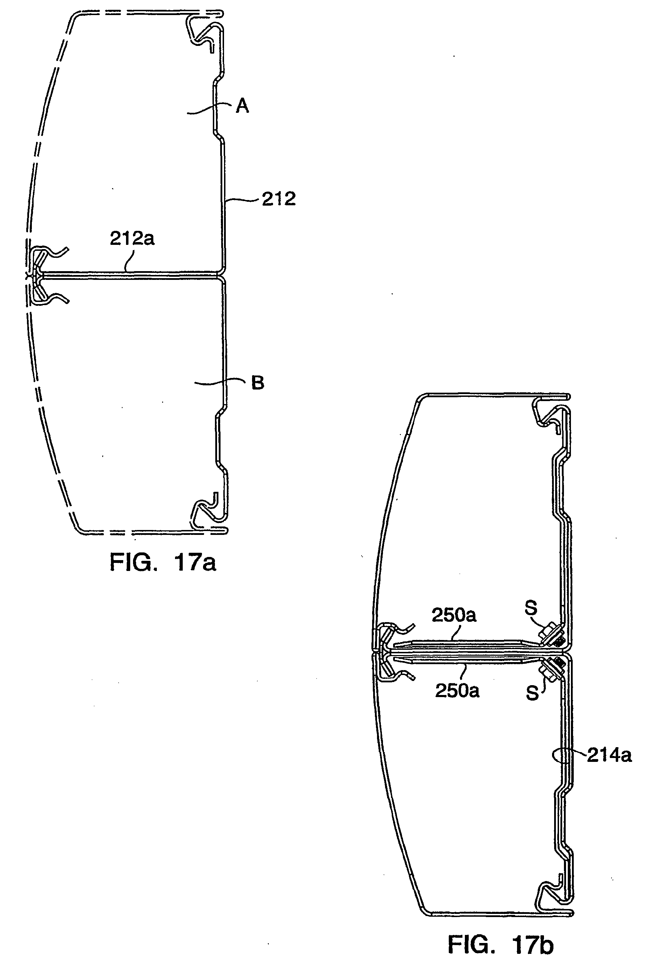

Fig. 17a shows a preferred one piece metal raceway base configuration with the top and bottom wireways, A and B respectively, defined by a web portion 212a formed with a double thickness, such that the web lager forms a 90° bend with the back of the "T", as shown at 220a.

Fig. 17b is similar to Fig. 17 but shows slightly different coupler elements 250a, 250a with the base of Fig. 17a.

Figs. 17a and 17b show the raceway coupling members 250 and 250a as held in place by screw fasteners S, S which are threadably received in openings provided for this purpose at the vertex of each coupling members 250 and 250a. Figs. 17 and 17b also illustrate the nesting relationship between the back wall 214 and 214a of the raceway base 220, 220a and these coupling elements 250, 250a. It will be apparent that these coupling elements 250, 250a serve the purpose of coupling adjacent end portions of raceway base members as described above, without interfering with the raceway covers 260 and 280, the cover components being held in place by the same marginal edge portions of the raceway base and the lips defined at the free end portions of the web 212 all as described previously with reference to these raceway covers 260 and 280. Thus, the separate wireways defined by the T-shaped raceway base 220, 220a and the raceway covers 260/280 are continued and defined in part by these unique raceway coupling elements 250, 250.

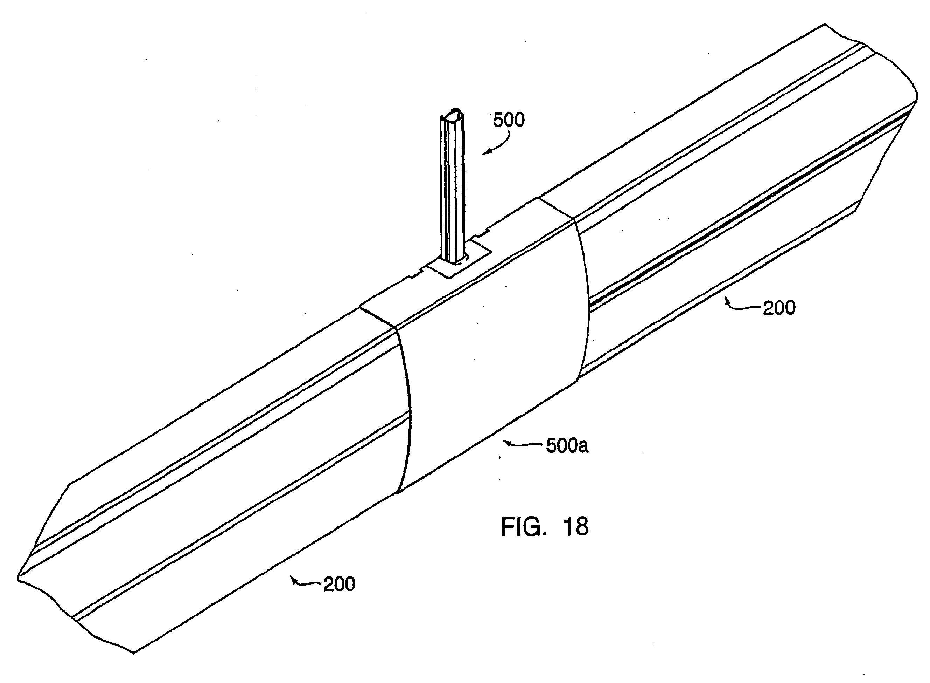

Fig. 18 illustrates raceway assemblies 200, 200 coupled together, but in a way such that the coupler 500a also accommodates a T-connection between the upper wireway and a smaller electrical conduit 500 oriented at right angles to the raceway of the present invention. The coupler 500a is provided with a knockout opening to accommodate the conduit 500 and/or a large conduit can also be accommodated by reason of a somewhat larger knock-out opening.

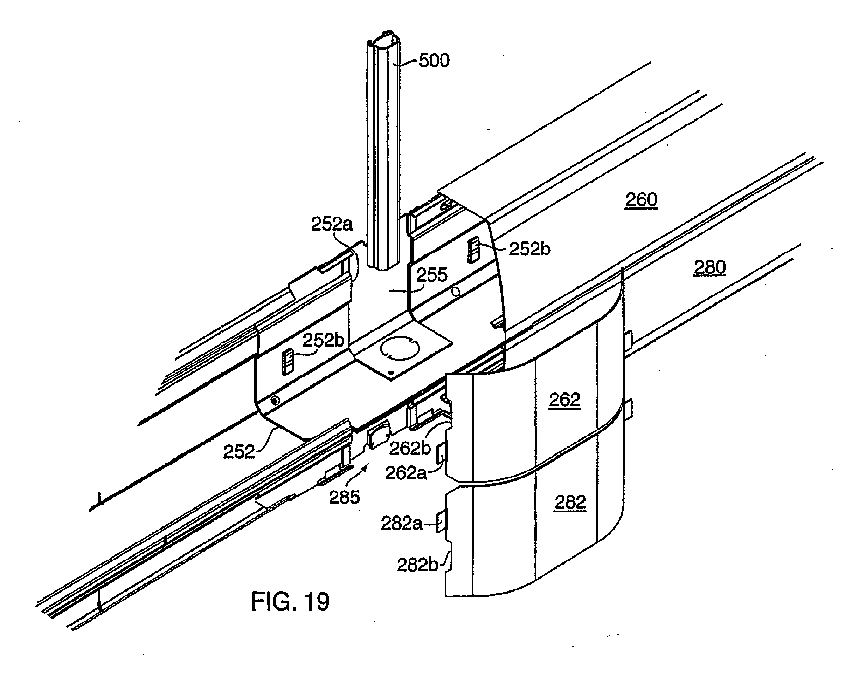

Fig. 19 shows the coupler cover removed, and illustrates a coupling element 252 associated with the upper wireway having a cutout region 252a for receiving a bracket 255 designed to accommodate the conduit 500. As with the previously described couplings 250, 250, coupling element 252 spans the gap between spaced but aligned raceway base components. In accordance with the present invention cable guides 262 and 282 are provided to afford some protection for the cables or conductors provided in the wireways defined by the T-shaped base and the raceway cover components 260 and 280. These cable guides 262 and 282 are configured to allow such cables to pass through the wireways, when assembled with the coupling element 252, but to allow cables within the conduit 500 to run downwardly into the upper wireway, and to be fed in one direction or another of the upper wireway shown in Fig. 19. Tabs 262a on the upper cable guide 262 snap into slots 252b provided for this purpose in the wall of the coupling element 252 for this purpose. Relieved areas 262b allow cables within the conduit 500 to clear the cable guide 262. The lower cable guide 282 may be used to provide an access point in the lower wireway for feeding wires from the wall structure into the lower wireway. A port 285 is provided for this purpose in the lower coupling element as best shown in Fig. 19.

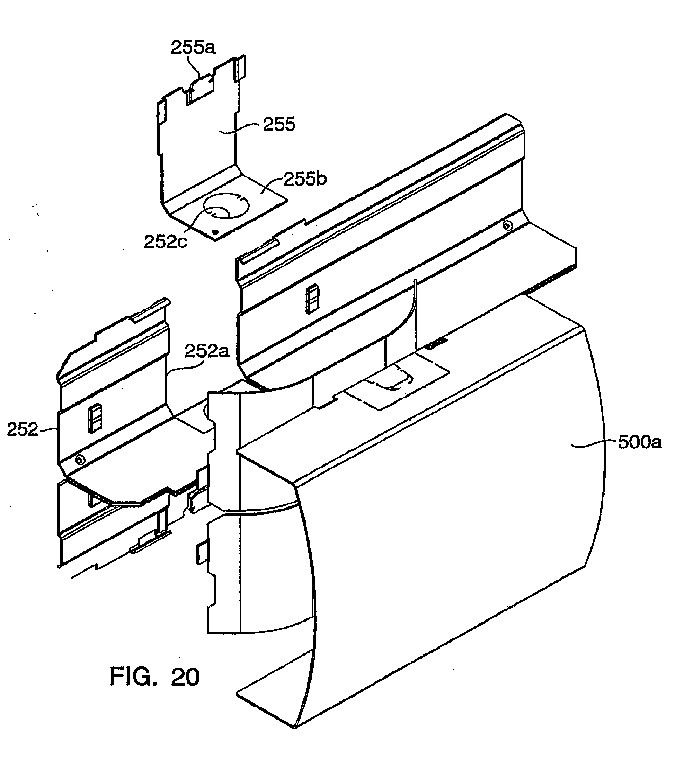

Fig. 20 is an exploded view showing the upper coupling element 252 having a relieved region 252a for receiving the L-shaped bracket 255 that serves to anchor the conduit 500 by means of tab 255a, and to include a lower portion 255b that defines a knockout opening for cables run to the lower wireway defined by the raceway assembly of Fig. 19. Fig. 20 also shows the coupling cover 500a together with its knockout openings in the top wall for receiving conduits such as illustrated at 500, or larger conduit as dictated by the needs of a particular installation.

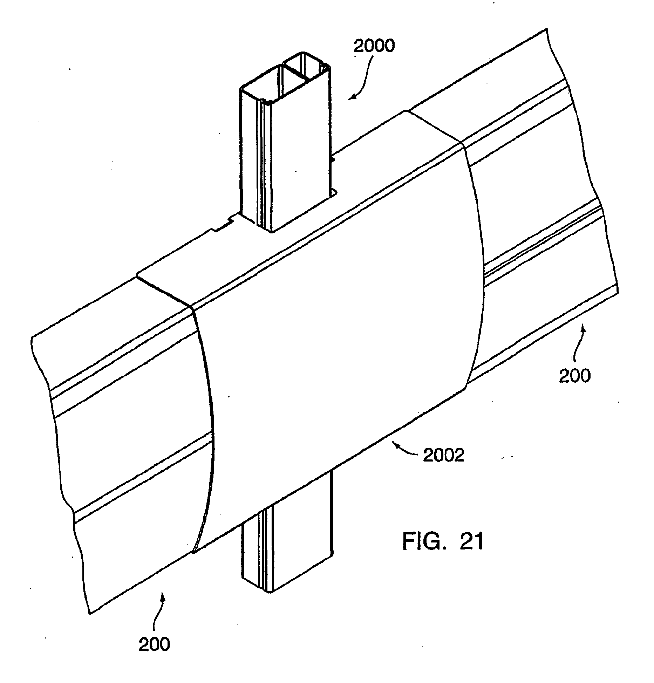

Fig. 21 shows adjacent raceway assemblies of the present invention coupled as described previously to afford a bridge between the wireways defined therein and a crossing conduit 2000. Coupling 2002 is provided with knockout openings in both its top and bottom walls for this purpose.

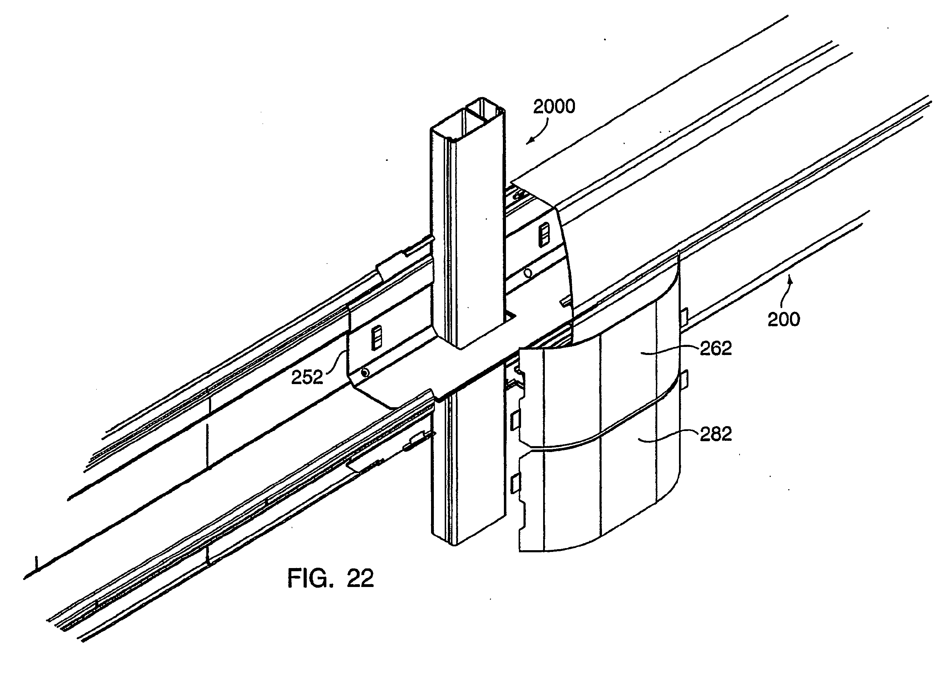

Fig. 22 shows the crossing conduit 2000 of Fig. 21 in greater detail, together with the raceway coupling elements 252 required to bridge the gap between the aligned ends of the raceway base components. From Fig. 22 it will be apparent that the L-shaped bracket of the previous views (Fig. 20 and 21) is not required, and it will further be apparent that the crossing raceway 2000 does not fed cables to the wireways defined in the raceway of the present invention. However, cable guides 262 and 282 are utilized in the same manner as described above to facilitate feeding of cables in these upper and lower raceways.

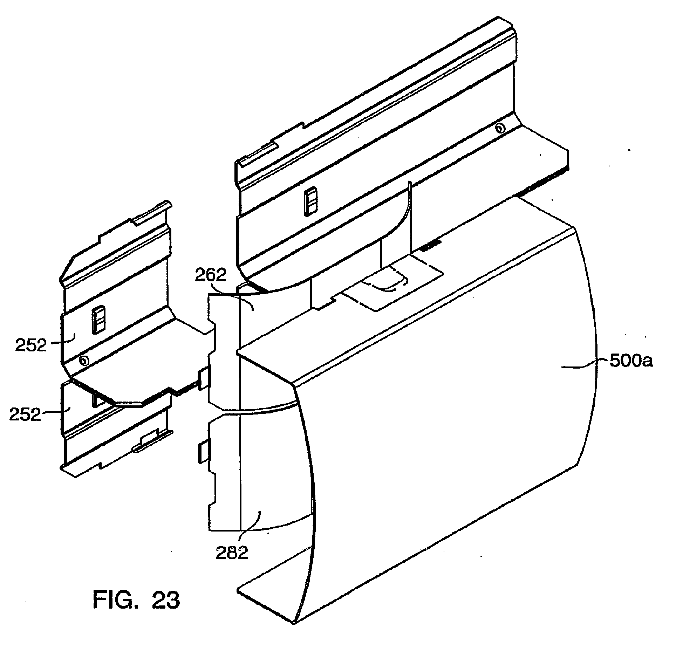

Fig. 23 shows the coupling elements 252,252 associated with the upper and lower wireways of Figs. 21 and 22, as well as the cable guides 262 and 282, and coupling cover 500a with a knockout opening pattern similar to that of the coupling cover 500a of Figs. 18.

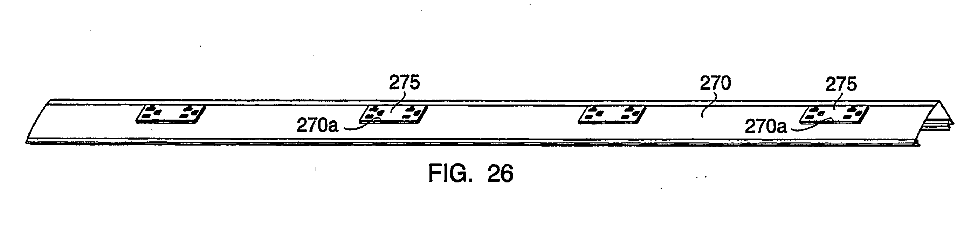

In Fig. 24-26 a raceway cover 279 has generally rectangular cutouts 270a for presenting outlet plugs 275 at longitudinally spaced predetermined intervals along the cover as, but shown in Fig. 26.

The cover 270 is similar to those described above and has longitudinally extending marginal edges of base plate as shown at the lower edge of base 320. An inner recess 270c forms a pocket to receive the edge 276a of a device bracket 276, also of L-shape, but fits into cover 270 to form a cavity for the outlet device 275. An upper edge 276b of L-shaped device bracket 276 fits into a recess defined at the top inside edge of cover 275a, shown at 270d. The device bracket 276 is of shorter extent than the outlet device 275 as suggested in Fig. 25.

As suggested in Fig. 24, power cables in the lower wireway of the raceway are connected to the terminals of the outlet devices in a conventional manner. These L-shaped covers 270 can be preassembled, as suggested in Fig. 26, for use with selected raceway assemblies of the type described above, for their simplifying the task of the installer.

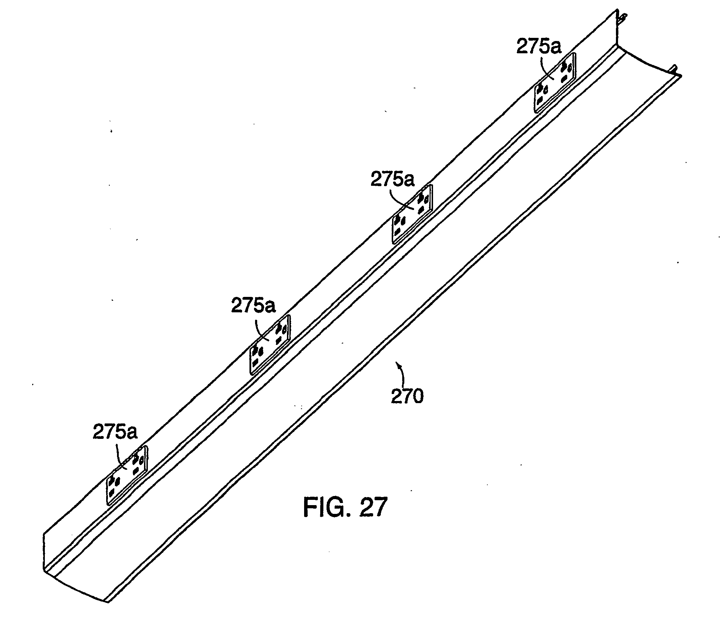

Fig. 27 shows outlet devices of the duplex type mounted in the downwardly facing wall of raceway cover component 270a. Data/communication devices (not shown) of appropriate size might also be mounted in this lower wall of lower raceway cover 270a. This is so in spite of the preference for locating the data/communication cabling in the upper wireway, and the power cables in the lower wireway of a raceway assembly incorporating the present invention. The T-shaped base member preferably has knock-out openings such as shown in Fig. 16a that allow wiring from the upper wireway to pass through the web portion of the T-shaped base for this purpose.

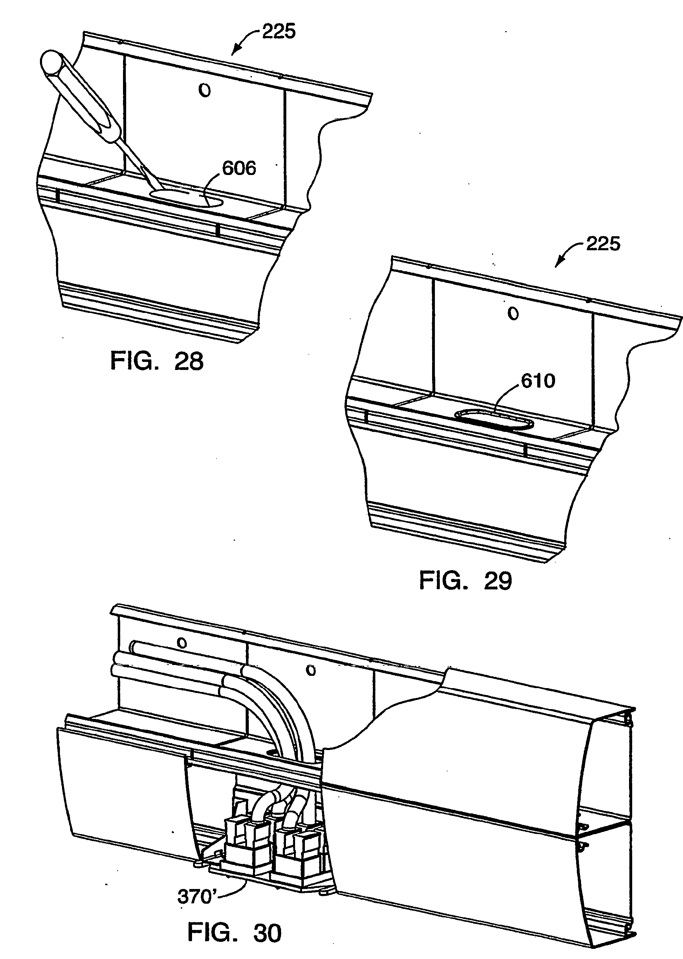

Fig. 28 shows a T-shaped raceway base 225, with one of the knockout openings 606 defined in the web portion thereof in the process of being removed by a tool.

Fig. 29 shows the opening after removal of the knockout, and after installation of a grommet 610 that serves to protect cross over cabling running through the divider or web from the upper to the lower wire-way.

Fig. 30 illustrates several telecommunications/data outlet devices mounted in a device bracket 370' provided in the lower wire-way of the raceway, Cross over cables are run through the grommeted openings 606 from the upper to the lower wire-way for connection to these outlet devices. The devices shown are data/communication devices, and the cables are of relatively stiff materials so as to require the relatively generous radius of curvature shown.

Fig. 31 shows an assembly incorporating the components of Fig. 30, with the enclosure 375' provided in place on the device bracket as described previously with reference to Figures 2 and 3.

Fig. 32A-A is a cross section showing the cross over pathway provided for the cables C from the upper wire-way through the web and into the enclosure associated with the downwardly facing receptacle, in the lower wire-way.

Fig. 33 is similar to Fig. 30, and also shows the generous radius of curvature for the cable in the upper wire-way that crosses the web portion of the base for entry into the enclosure associated with the outlet device, that downwardly face in relationship to the lower wire-way. Note that cables B pass by the enclosure 375' and are isolated from the cables C

Finally, Fig. 33 shows the last stage in the installation, with cover 400 provided in overlapping relationship to the spaced end portions of the lower raceway covers 280, 280. The cover 400' is held in place by snapping onto the raceway base as described in the previously cited co-pending application.

Original drawings from our earlier filed case disclose only a power outlet device, which is located in the downwardly facing direction with respect to the lower wire-way. Other outlet devices, such as telephone or data communication jacks, for example, can be similarly arranged in downwardly facing relationship within the lower wire-way in a device bracket as shown in Figures 6,7, and 8. It is an important feature of the present invention that cabling of the fiber optic variety with limited bend radius requirements can be accommodated. Raceways generally require such cabling to be accommodated in restricted spaces, and this leads to limitations on the ability to locate data/communications outlet plugs in such raceways requiring the use of raceway of a much larger cross section than should be necessary.

The present invention affords the architect, and the consulting design engineer the opportunity to provide a relatively generous bend radius for cabling in the upper wire-way. The design allows fiber optic cable to pass through the wire-way divider wall into an adjacent wire-way where the outlet devices face downwardly, in a direction that makes it very convenient for the installer to connect cable ends to such cable jacks as are provided downwardly in the lower wire-way. The user can connect to these jacks in a way that renders such connecting cables relatively less obtrusive. The drawings presented, illustrate the generous radius of curvature for the cabling C. A generous radius of curvature is provided for the cable passing through the crossover pathway to the devices provided in downwardly facing relationship in the lower wire-way.

The drawings and description emphasize the advantages to orienting outlet devices "downwardly" in the raceway as shown. This orientation offers many advantages, but persons skilled in this art will appreciate that many of these advantages can also be realized when outlet devices are oriented "upwardly", as would be the case at a work station coral for example. The outlet devices may also face forwardly, or rearwardly relative to the raceway dividing wall in the event the raceway is mounted on a horizontal surface. Thus, the term "downwardly" as used in the appended claims should be taken as meaning only that the orientation of the device bracket in the raceway results in a position for the outlet device that is perpendicular to the surface that the raceway itself is mounted to. The modifier "downwardly" is intended to mean only that the outlet device can be positioned parallel to the divider wall of the base, and perpendicular to the surface or wall structure on which the raceway is mounted. A vertical wall may be the preferred such structure, but other flat surfaces may also provide a support structure for the unique raceway design disclosed herein. In the light of the above, it is therefore understood that within the scope of the appended claims the invention may be practiced otherwise than as specifically claimed.

## Claims

1. A modular raceway system comprising elongated raceway assemblies (200), each of said raceway assemblies (200) including an elongated base (220) having upper and lower plate portions for abutting a wall, said plate portions (214) having upper and lower marginal edges (214a, 214b) respectively, coupling means (100) for supporting said bases (220) in longitudinal spaced alignment with one another to provide a range of gaps (G) between first and second raceway bases (220),
said first raceway base (220) having a length such that an adjacent second elongated base (220) associated with an adjacent raceway assembly (200) can be aligned therewith, and be spaced therefrom, so as to provide a range of gaps (G) or spaces between said first and second raceway bases (220), **characterized in that**:
said first and second elongated bases (220) each have a projecting web (212) joined to said base plate portion (214) intermediate said marginal edges to form a T-shaped cross section without sidewalls so as to define upwardly and downwardly open elongated wireways (A, B), said base web (212) having a free marginal edge with oppositely projecting elongated lips (212a, 212b), and
upper and lower elongated raceway cover components (260, 280) of L-shaped cross-section and having elongated marginal edge portions (290a, 290b) defining sockets (290d) for receiving said projecting lips (212a, 212b) on said base (220), and said cover components (260, 280) having opposite edge portions that mate with said upper and lower base marginal edges of said base (220) respectively cooperating with said base (220) to further define said upper and lower wireways (A, B) respectively.

2. The modular raceway system according to Claim 1 further including individual device brackets (270) for said upper and lower wireways (A, B), each individual device bracket (270) having a frame with flanges received by one of said projecting lips (212a, 212b) of said base plate web (212), and each individual device bracket frame also having a rearwardly offset portion (270b, 270c) defining at least one rearwardly projecting leg portion (270d) with a free end defining a socket that mates with one of said upper and lower elongated marginal edges (214a, 214b) of said T-shaped base (220).

3. The modular raceway system according to Claim 2 further including a device cover having a length in the longitudinal direction greater than that of said individual device bracket (270), said device cover having segments in the marginal edges thereof defining flanges (290d) received by said T-shaped base web lips, and said device covers having segments defining sockets received by one of said T-shaped base upper and lower marginal edges (214a, 214b).

4. The modular raceway system according to Claim 1 wherein each of said elongated T- shaped raceway bases (220) has lateral lines of weakening (210) at intervals along its length, and pre-punched wall fastener openings provided between said lines of weakening (210).

5. The modular raceway system according to Claim 1 wherein said raceway cover components (260, 280) include angularly related front and rearwardly projecting sides of the L-shape, and said L-shaped raceway covers (260, 280) having lines of weakening at intervals along their length.

6. The modular raceway system according to Claim 1 additionally comprising coupling means (100) for securing one of said base plate portions (214) to another base plate portion (214) so that said base plate portions (214) are aligned with one another, said coupling means (100) overlying said aligned base plate portions (214) to provide electrical continuity therebetween when said base plate portions (214) are spaced apart longitudinally by a gap (G), and raceway cover components (260, 280) mounted to said base plate portions (214) for spanning said gap (G) and defining wireways (A, B) that are enclosed, particularly at said gap (G).

7. The modular raceway system of Claim 6 wherein said T-shaped base (220) and said L-shaped raceway cover components (260, 280) interact to enclose said wireways (A, B), the wireways (A, B) being separated by said projecting web (212) of said base (220).

8. The modular raceway system according to Claim 7 wherein said coupling means (100) comprise individual coupling elements (250) provided in said wireways (A, B) defined by said base (220) and cover components (260, 280), said coupling elements (250) also having an L-shape cooperating with said cover components (260, 280) to define the said wireways (A, B) at said gaps (G).

9. The modular raceway system according to Claim 8 wherein at least some of said coupling elements (250, 500a) include knock-out openings for receiving smaller raceways (500) oriented perpendicular said modular raceway system.

10. The modular raceway system according to Claim 9 further comprising cable guide elements provided in said knock-out openings defining coupling elements (250, 500a) to allow cables in the wireway defined by said raceway assembly (200) to be drawn through the wireway without interference from said perpendicular raceway (500).

11. The modular raceway system according to Claim 6 further comprising at least one raceway slip cover (300) for overlying the spaced end portion of said cover components (260, 280) of said aligned raceway assemblies (200).

12. The modular raceway system according to Claim 1 wherein said L-shaped covers (260, 280) including front walls, and a top or bottom wall to provide said top and bottom wireways (A, B).

13. The modular raceway system according to Claim 12 wherein said raceway covers (280) are spaced from one another to provide a space therebetween, and a device bracket (370) secured to said raceway base (214) in said space.

14. The modular raceway assembly according to Claim 13 wherein said device bracket (370) is of generally U-shape such that the base of the U lies adjacent to the base plate (214) of the raceway assembly (200), and the lower leg of the U defines an opening for receiving an outlet device (250).

15. The modular raceway system according to Claim 12 wherein some of the raceway covers (280, 400) associated with the lower wireway (B) are spaced from one another to define a space therebetween, and a device bracket (370) provided in said space, said device bracket (370) having a generally U-shape with the base of the U adjacent the base plate (214) in the raceway assembly (200), and with a leg defining an opening for receiving an outlet device (250) whereby to present the outlet in the lower wall of the L-shaped raceway cover (400).

16. The modular raceway system according to Claim 15 further comprising a device bracket cover (400) for overlying the space between the adjacent raceway cover components (260, 280) and said device bracket (370), said device bracket cover selected from a variety of differently configured covers associated with a variety of different devices.

17. The modular raceway system according to Claim 16 further comprising an outlet box defining element held in said device bracket (370), and provided between said device bracket (370) and said device bracket cover (400) to surround and protect electrical connections made to the device installed in the device bracket (370).

18. The modular raceway system according to Claim 6 wherein the coupling means (100) accommodate transition fittings for bridging a cross raceway and/or feeding cables from and to such a cross raceway.

19. The modular raceway system according to Claim 1 further including at least one device bracket (370) for supporting an outlet device (250) so that the outlet device (250) is provided in said downwardly facing elongated surface of said L-shaped cover component (400), said one device bracket (370) including a protective enclosure (375) surrounding said outlet device (250) to isolate the outlet device (250) from wiring in the wireway (B) defined by said L-shaped raceway cover component (400) with the downwardly facing surface.

20. The modular raceway system according to Claim 19 further including a second L-shaped cover component cooperating with said one L-shaped cover component (280) and said second L-shaped cover component (280) being longitudinal spaced from said one cover component (280), a second device bracket provided between said spaced cover components (280, 280).

21. The modular raceway system according to Claim 20 further including an enclosure (375) secured to said one device bracket (370) for isolating wiring to the outlet device (250) from a second elongated wire way isolated from said at least one wire way.

22. The modular raceway system according to Claim 19 further including additional outlet devices provided in longitudinally spaced relation to said one outlet device (250) in an L- shaped cover component (400) having said downwardly facing surface, and said L-shaped cover component being pre-wired so that said outlet devices (250) are interconnected electrically by wiring provided in said at least one wire way.

23. The modular raceway system according to Claim 1 wherein said projecting web (212) separates said upper and lower wire-ways (A, B) so that low voltage cables in one of said upper and lower wire-ways (A, B) are electrically isolated from high voltage cables in the other of said upper and lower wire-ways (A, B), said projecting web (212) having spaced knockout openings, a device bracket (370) mounted in said lower wire-way (B) for supporting at least one outlet device (250) in downwardly facing relationship to said lower wire-way (B), and an enclosure (375) mounted to said device bracket (370) inside said lower wire-way (B), said enclosure (375) isolating said outlet device (250) from cables running along said lower wire-way (B), said enclosure (375) and said device bracket (370) cooperating with a knockout opening to define an enclosed pathway for accommodating cables from said upper wire-way (A) through said divider knockout opening for connection to the outlet device (250) oriented in downwardly facing relationship to said lower wire- way (B).

24. The modular raceway system according to Claim 23 wherein said lower raceway covers are spaced apart to define a gap there-between, and said device bracket (370) provided in said gap.

25. The modular raceway system according to Claim 24 further including a device bracket cover overlying the gap between said spaced lower raceway covers.

## Patentansprüche

1. Modulares Kabelkanalsystem mit langgestreckten Kabelkanalbaugruppen (200), wobei jede der Kabelkanalbaugruppen (200) eine langgestreckte Basis (220) aufweist, die einen oberen und einen unteren Plattenteil zur Anlage an einer Wand hat, wobei die Plattenteile (214) einen oberen und einen unteren marginalen Rand (214a, 214b) haben, und Kuppeleinrichtungen (100) zum Tragen der Basen (220) in longitudinaler, beabstandeter Ausrichtung mit einander, um einen Bereich von Lücken (G) zwischen ersten und zweiten Kabelkanalbasen (220) zu bilden,
wobei die erste Kabelkanalbasis (220) eine derartige Länge hat, dass eine benachbarte zweite langgestreckte Basis (220), die einer benachbarten Kabelkanalbaugruppe (200) zugeordnet ist, mit dieser ausgerichtet und von dieser beabstandet werden kann, um so einen Bereich von Lücken (G) oder Zwischenräumen zwischen den ersten und zweiten Kabelkanalbasen (220) zu schaffen, **dadurch gekennzeichnet, dass**:
die ersten und zweiten langgesteckten Basen (220) jeweils einen vorstehenden Steg (212) haben, welcher mit dem Basisplattenteil (214) zwischen den marginalen Rändern verbunden ist, um einen T-förmigen Querschnitt ohne Seitenwände zu bilden und so aufwärts und abwärts offene, langgestreckte Drahtbahnen (A, B) zu schaffen, wobei der Basissteg (212) einen freien marginalen Rand mit entgegengesetzt vorstehenden langgestreckten Lippen (212a, 212b) hat, und
obere und untere langgestreckte Kabelkanaldeckelkomponenten (260, 280), die von L-förmigem Querschnitt sind und langgestreckte marginale Randteile (290a, 290b) haben, welche Buchsen (290d) bilden zum Aufnehmen der vorstehenden Lippen (212a, 212b) auf der Basis (220), wobei die Deckelkomponenten (260, 280) entgegengesetzte Randteile haben, welche mit den oberen und unteren Basismarginalrändern der Basis (220) zusammenpassen, um mit der Basis (220) zusammenzuwirken, um weiter die oberen beziehungsweise unteren Drahtbahnen (A, B) zu bilden.

2. Modulares Kabelkanalsystem nach Anspruch 1, weiter mit einzelnen Vorrichtungskonsolen (270) für die oberen und unteren Drahtbahnen (A, B), wobei jede einzelne Vorrichtungskonsole (270) einen Rahmen mit Flanschen hat, welche durch eine der vorstehenden Lippen (212a, 212b) des Basisplattensteges (212) aufgenommen sind, und wobei der Rahmen jeder einzelnen Vorrichtungskonsole auch einen nach hinten versetzten Teil (270b, 270c) hat, der wenigstens einen nach hinten vorstehenden Schenkelteil (270d) bildet mit einem freien Ende, welches eine Buchse bildet, die mit einem der oberen und unteren langgestreckten marginalen Ränder (214a, 214b) der T-förmigen Basis (220) zusammenpasst.

3. Modulares Kabelkanalsystem nach Anspruch 2, weiter mit einem Vorrichtungsdeckel, der eine Länge in der longitudinalen Richtung hat, die größer ist als die der einzelnen Vorrichtungskonsolen (270), wobei der Vorrichtungsdeckel Abschnitte in seinen marginalen Rändern hat, welche Flansche (290d) bilden, die durch die T-förmigen Basissteglippen aufgenommen sind, und wobei die Vorrichtungsdeckel Abschnitte haben, welche Buchsen bilden, die durch einen der oberen und unteren marginalen Ränder (214a, 214b) der T-förmigen Basis aufgenommen sind.

4. Modularen Kabelkanalsystem nach Anspruch 1, wobei jede der langgesteckten T-förmigen Kabelkanalbasen (220) laterale Schwächungslinien (210) in Intervallen längs ihrer Länge hat und vorgestanzte Wandbefestigeröffnungen, welche zwischen den Schwächungslinien (210) gebildet sind.

5. Modulares Kabelkanalsystem nach Anspruch 1, wobei die Kabelkanaldeckelkomponenten (260, 280) abgewinkelt zugeordnete, nach vorn und hinten vorstehende Seiten der L-Form aufweisen und wobei die L-förmigen Kabelkanaldeckel (260, 280) Schwächungslinien in Intervallen längs ihrer Länge haben.

6. Modulares Kabelkanalsystem nach Anspruch 1, weiter mit Kuppeleinrichtungen (100) zum Befestigen von einem der Basisplattenteile (214) an einem anderen Basisplattenteil (214), so dass die Basisplattenteile (214) miteinander ausgerichtet sind, wobei die Kuppeleinrichtungen (100) den ausgerichteten Basisplattenteilen (214) überlagert sind, um für elektrischen Durchgang zwischen denselben zu sorgen, wenn die Basisplattenteile (214) longitudinal durch eine Lücke (G) gegenseitig beabstandet sind, und Kabelkanaldeckelkomponenten (260, 280), welche an den Basisplattenteilen (214) montiert sind, um die Lücke (G) zu überspannen und Drahtbahnen (A, B) zu bilden, die umschlossen sind, insbesondere an der Lücke (G).

7. Modulares Kabelkanalsystem nach Anspruch 6, wobei die T-förmige Basis (220) und die L-förmigen Kabelkanaldeckelkomponenten (260, 280) zusammenwirken, um die Drahtbahnen (A, B) zu umschließen, wobei die Drahtbahnen (A, B) durch den vorstehenden Steg (212) der Basis (220) getrennt sind.

8. Modulares Kabelkanalsystem nach Anspruch 7, wobei die Kuppeleinrichtungen (100) einzelne Kuppelelemente (250) umfassen, welche in den Drahtbahnen (A, B) gebildet sind, die durch die Basis (220) und die Deckelkomponenten (260, 280) gebildet sind, wobei die Kuppelelemente (250) auch eine L-Form haben, welche mit den Deckelkomponenten (260, 280) zusammenwirkt, um die Drahtbahnen (A, B) in den Lücken (G) zu bilden.

9. Modulares Kabelkanalsystem nach Anspruch 8, wobei wenigstens einige der Kuppelelemente (250, 500a) Ausbrechfenster aufweisen zum Empfangen von kleineren Kabelkanälen (500), welche rechtwinklig zu dem modularen Kabelkanalsystem ausgerichtet sind.

10. Modulares Kabelkanalsystem nach Anspruch 9, weiter mit Kabelführungselementen, die in den Ausbrechöffnungen angeordnet sind und Kuppelelemente (250, 500a) bilden, um zu erlauben, dass Kabel in der Drahtbahn, welche durch die Kabelkanalbaugruppe (200) gebildet ist, durch die Drahtbahn hindurchgezogen werden können, ohne durch den rechtwinkligen Kabelkanal (500) behindert zu werden.

11. Modulares Kabelkanalsystem nach Anspruch 6, weiter mit wenigstens einem Kabelkanalschiebedeckel (300) zum Überlagern des beabstandeten Endteils der Deckelkomponenten (260, 280) der ausgerichteten Kabelkanalbaugruppen (200).

12. Modulares Kabelkanalsystem nach Anspruch 1, wobei die L-förmigen Deckel (260, 280) Frontwände und eine obere oder untere Wand aufweisen, um die obere und untere Drahtbahn (A, B) zu schaffen.

13. Modulares Kabelkanalsystem nach Anspruch 12, wobei die Kabelkanaldeckel (280) voneinander beabstandet sind, um zwischen sich einen Zwischenraum zu schaffen, und wobei eine Vorrichtungskonsole (370) an der Kabelkanalbasis (214) in der Lücke befestigt ist.

14. Modulare Kabelkanalbaugruppe nach Anspruch 13, wobei die Vorrichtungskonsole (370) insgesamt U-förmig ist, so dass die Basis des U benachbart zu der Basisplatte (214) der Kabelkanalbaugruppe (200) liegt und der untere Schenkel des U eine Öffnung bildet zum Empfangen einer Auslassvorrichtung (250).

15. Modulares Kabelkanalsystem nach Anspruch 12, wobei einige der Kabelkanaldeckel (280, 400), welche der unteren Drahtbahn (B) zugeordnet sind, voneinander beabstandet sind, um zwischen sich einen Zwischenraum zu bilden, und wobei eine Vorrichtungskonsole (370) in dem Zwischenraum angeordnet ist, wobei die Vorrichtungskonsole (370) insgesamt U-förmig ist, wobei die Basis des U der Basisplatte (214) in der Kabelkanalbaugruppe (200) benachbart ist und wobei ein Schenkel eine Öffnung bildet zum Aufnehmen einer Auslassvorrichtung (250), um dadurch den Auslass in der unteren Wand des L-förmigen Kabelkanaldeckels (400) zu präsentieren.

16. Modulares Kabelkanalsystem nach Anspruch 15, weiter mit einem Vorrichtungskonsolendeckel (400) zum Überlagern der Lücke zwischen den benachbarten Kabelkanaldeckelkomponenten (260, 280) und der Vorrichtungskonsole (370), wobei der Vorrichtungskonsolendeckel ausgewählt ist aus einer Vielfalt von unterschiedlich konfigurierten Deckeln, die einer Vielfalt verschiedener Vorrichtungen zugeordnet sind.

17. Modulares Kabelkanalsystem nach Anspruch 16, weiter mit einem Auslasskasten, welcher ein Element bildet, das in der Vorrichtungskonsole (370) gehalten ist und zwischen der Vorrichtungskonsole (370) und dem Vorrichtungskonsolendeckel (400) angeordnet ist, um elektrische Verbindungen, die mit der Vorrichtung hergestellt sind, welche in der Vorrichtungskonsole (370) installiert ist, zu umschließen und zu schützen.

18. Modulares Kabelkanalsystem nach Anspruch 6, wobei die Kuppeleinrichtung (100) Übergangsbeschläge aufnimmt zum Überbrücken eines Querkabelkanals und/oder zum Führen von Kabeln aus und zu einem Querkabelkanal.

19. Modulares Kabelkanalsystem nach Anspruch 1, weiter mit wenigstens einer Vorrichtungskonsole (370) zum Tragen einer Auslassvorrichtung (250) so, dass die Auslassvorrichtung (250) in der abwärtsgewandten langgestreckten Fläche der L-förmigen Deckelkomponente (400) gebildet ist, wobei die eine Vorrichtungskonsole (370) einen schützenden Verschluss (375) aufweist, welcher die Auslassvorrichtung (250) umgibt, um die Auslassvorrichtung (250) von der Verdrahtung auf der Drahtbahn (B) zu isolieren, welche durch die L-förmige Kabelkanaldeckelkomponente (400) mit der abwärtsgewandten Fläche gebildet ist.

20. Modulares Kabelkanalsystem nach Anspruch 19, weiter mit einer zweiten L-förmigen Deckelkomponente, welche mit der einen L-förmigen Deckelkomponente (280) zusammenwirkt, wobei die zweite L-förmige Deckelkomponente (280) von der einen Deckelkomponente (280) longitudinal beabstandet ist und wobei eine zweite Vorrichtungskonsole zwischen den beabstandeten Deckelkomponenten (280, 280) angeordnet ist.

21. Modulares Kabelkanalsystem nach Anspruch 20, weiter mit einer Hülle (375), die an der einen Vorrichtungskonsole (370) befestigt ist, um die Verdrahtung mit der Auslassvorrichtung (250) von einer zweiten langgestreckten Drahtbahn zu isolieren, welche von der mindestens einen Drahtbahn isoliert ist.

22. Modulares Kabelkanalsystem nach Anspruch 19, weiter mit zusätzlichen Auslassvorrichtungen, die in longitudinal beabstandeter Beziehung zu der einen Auslassvorrichtung (250) in einer L-förmigen Deckelkomponente (400) angeordnet sind, welche die nach unten gewandte Fläche haben, wobei die L-förmige Deckelkomponente vorverdrahtet ist, so dass die Auslassvorrichtungen (250) durch eine auf der wenigstens einen Drahtbahn angeordnete Verdrahtung elektrisch miteinander verbunden sind.

23. Modulares Kabelkanalsystem nach Anspruch 1, wobei der vorstehende Steg (212) die oberen und unteren Drahtbahnen (A, B) trennt, so dass Niederspannungskabel in einer von den oberen und unteren Drahtbahnen (A, B) elektrisch isoliert sind von Hochspannungskabeln in der anderen der oberen und unteren Drahtbahnen (A, B), wobei der vorstehende Steg (212) beabstandete Ausbrechöffnungen hat, eine Vorrichtungskonsole (370), die in der unteren Drahtbahn (B) montiert ist, zum Tragen von wenigstens einer Auslassvorrichtung (250) in nach unten gewandter Beziehung zu der unteren Drahtbahn (B), und eine Hülle (375), die an der Vorrichtungskonsole (370) innerhalb der unteren Drahtbahn (B) montiert ist, wobei die Hülle (375) die Auslassvorrichtung (250) von Kabeln isoliert, die längs der unteren Drahtbahn (B) laufen, wobei die Hülle (375) und die Vorrichtungskonsole (370) mit einer Ausbrechöffnung zusammenwirken, um einen umschlossenen Weg zu bilden zum Aufnehmen von Kabeln von der oberen Drahtbahn (A) aus durch die Teilerausbrechöffnung zur Verbindung mit der Auslassvorrichtung (250), welche in nach unten gewandter Beziehung zu der unteren Drahtbahn (B) angeordnet ist.

24. Modulares Kabelkanalsystem nach Anspruch 23, wobei die unteren Kabelkanaldeckel gegenseitig beabstandet sind, um zwischen sich eine Lücke zu bilden, und wobei die Vorrichtungskonsole (370) in der Lücke angeordnet ist.

25. Modulares Kabelkanalsystem nach Anspruch 24, weiter mit einem Vorrichtungskonsolendeckel, welcher der Lücke zwischen den beabstandeten unteren Kabelkanaldeckeln überlagert ist.

## Revendications

1. Système modulaire de chemin de câbles comportant des agencements de chemin de câbles allongés (200), chacun des agencements de chemin de câbles (200) incluant une base allongée (220) comportant des parties de plaque supérieurs et inférieures pour confiner à une paroi les parties de plaque (214) comportant des bords marginaux supérieurs et inférieurs (214a, 214b) respectivement, des moyens de couplage (100) pour soutenir les bases (220) en alignement espacé longitudinal l'une avec l'autre de manière à produire une gamme de lacunes (G) entre des premières et deuxièmes bases de chemin de câbles (220),
la première base de chemin de câbles (220) ayant une longueur telle qu'une deuxième base allongée adjacente (220) associée à un agencement de chemin de câbles adjacent (200) peut être alignée à celle-ci et être espacée de celle-ci de manière à produire une gamme de lacunes (G) ou d'espaces entre la première et la deuxième base de chemin de câbles (220), **caractérisé en ce que**:
la première et la deuxième base allongée (220) comportent chacune une âme saillante (212) raccordée à la partie de plaque de base (214) intermédiaire aux bords marginaux de manière à former une section transversale en forme de T sans parois latérales de manière à définir des passages de câble (A, B) allongés qui sont ouverts vers le haut et vers le bas, l'âme de base (212) comportant un bord marginal libre avec des lèvres allongées saillantes en directions opposées (212a, 212b) et
des composants de couverture de chemin de câbles allongés supérieur et inférieur (260, 280) avec une section transversale en forme de L et comportant de parties de bord marginales allongées (290a, 290b) qui définissent des prises (290d) pour recevoir les lèvres saillantes (212a, 212b) sur la base (220), et les composants de couverture (260, 280) comportant des parties de bord opposées qui s'accordent aux bords marginaux de base inférieur et supérieur de la base (220) coopérant respectivement avec la base (220) de manière à définir en plus les passages de câble (A, B) supérieur et inférieur, respectivement.

2. Système modulaire de chemin de câbles selon la revendication 1, incluant en plus des supports de dispositif individuels (270) pour les passages de câble supérieur et inférieur (A, B), chaque support de dispositif (270) comportant un cadre avec des flasques reçus par l'une des lèvres saillantes (212a, 212b) de l'âme de plaque de base (212), chaque cadre de support de dispositif individuel comportant en plus une partie (270b, 270c) décalée vers l'arrière qui définit au moins une partie de pied (270d) saillante vers l'arrière avec une terminaison libre qui définit une prise qui s'accorde à l'un des bords marginaux allongés supérieur et inférieur (214a, 214b) de la base en forme de T (220).

3. Système modulaire de chemin de câbles selon la revendication 2, incluant en plus une couverture de dispositif avec une longueur dans la direction longitudinale supérieure à celle du support de dispositif individuel (270), la couverture de dispositif comportant des segments dans ses bords marginaux, définissant des flasques (290d) reçus par les lèvres d'âme de base en forme de T, les couvertures de dispositif ayant des segments définissant des supports reçus par l'un des bords marginaux supérieur et inférieur de base en forme de T (214a, 214b).

4. Système modulaire de chemin de câbles selon la revendication 1, chacune des bases de chemin de câbles allongées en forme de T (220) comportant des lignes latérales d'affaiblissement (210) dans des intervalles le long de sa longueur et des ouvertures de fixation murale pré-poinçonnées prévues entre les lignes d'affaiblissement (210).

5. Système modulaire de chemin de câbles selon la revendication 1, les composants de couverture de chemin de câbles (260, 280) incluant des faces de la forme de L saillant en avant et en arrière, les couvertures de chemin de câbles en forme de L (260, 280) comportant des lignes d'affaiblissement en intervalles le long de leur longueur.

6. Système modulaire de chemin de câbles selon la revendication 1, comportant en plus des moyens de couplage (100) pour fixer l'une des parties de plaque de base (214) à une autre partie de plaque de base (214) de sorte que les parties de plaque de base (214) sont alignées l'une à l'autre, les moyens de couplage (100) s'étendant au-dessus des parties de plaque de base alignées (214) de manière à produire de la continuité électrique entre celles-ci lorsque les parties de plaque de base (214) sont espacées l'une de l'autre en sens longitudinal par une lacune (G), et des composants de couverture de chemin de câbles (260, 290) montés aux parties de plaque de base (214) pour combler la lacune (G) et définissant des passages de câbles (A, B) qui sont enfermés notamment dans la lacune (G).

7. Système modulaire de chemin de câbles selon la revendication 6, la base en forme de T (220) et les composants de couverture de chemin de câbles en forme de L (260, 280) interagissant de façon à enfermer les passages de câble (A, B), les passages de câble (A, B) étant séparés par l'âme saillante (212) de la base (220).

8. Système modulaire de chemin de câbles selon la revendication 7, le moyen de couplage (100) comportant des éléments individuels de couplage (250) prévus dans les passages de câble (A, B) définis par la base (220) et les composants de couverture (260, 280), les éléments de couplage (250) ayant aussi une forme de L qui coopère avec les composants de couverture (260, 280) de manière à définir les passages de câbles (A, B) dans les lacunes (G).

9. Système modulaire de chemin de câbles selon la revendication 8, dans lequel au moins quelques-uns parmi les éléments de couplage (250, 500a) incluent des ouvertures d'extraction pour recevoir des chemins de câble plus petits (500) orientés perpendiculairement au système modulaire de chemin de câbles.

10. Système modulaire de chemin de câbles selon la revendication 9, comportant en plus des éléments de conduite de câble prévus dans les ouvertures d'extraction définissant des éléments de couplage (250, 500a) de manière à permettre de faire passer des câbles dans le passage de câbles défini par l'agencement de chemin de câbles (200) à travers le passage de câbles sans interférence du chemin de câbles perpendiculaire (500).

11. Système modulaire de chemin de câbles selon la revendication 6, comportant en plus au moins une couverture glissante de chemin de câbles (300) pour s'étendre au-dessus de la partie terminale espacée des composants de couverture (260, 280) des agencements de chemin de câbles (200) alignés.

12. Système modulaire de chemin de câble selon la revendication 1, les couvertures en forme de L (260, 280) incluant des parois de devant et une paroi supérieure ou inférieure de manière à produire les passages de câbles supérieur et inférieur (A, B).

13. Système modulaire de chemin de câbles selon la revendication 12, les couvertures de chemin de câbles (280) étant espacées l'une de l'autre de manière à produire un espace entre elles, et un support de dispositif (370) fixé à la base des chemins de câble (214) dans cet espace.

14. Système modulaire de chemin de câbles selon la revendication 13, le support de dispositif (370) étant généralement en forme de U de sorte que la base de la U est située à côté de la plaque de base (214) de l'agencement de chemin de câbles (200) et le pied inférieur de la U définit une ouverture pour recevoir un dispositif de sortie (250).

15. Système modulaire de chemin de câbles selon la revendication 12, dans lequel quelques-unes parmi les couvertures de chemin de câbles (280, 400) associées au passage de câbles inférieur (B) sont espacées l'une de l'autre de manière à définir un espace entre elles, et un support de dispositif (370) prévu dans cet espace, le support de dispositif (370) ayant généralement une forme de U, la base de la U se trouvant à côté de la plaque de base (214) dans l'agencement de chemin de câbles (200), un pied définissant une ouverture pour recevoir un dispositif de sortie (250) de manière à présenter la sortie dans la paroi inférieure de la couverture de chemin de câbles en forme de L (400).

16. Système modulaire de chemin de câbles selon la revendication 15, comportant en plus une couverture de support de dispositif (400) pour s'étendre au-dessus de l'espace entre les composants de couverture de chemin de câbles adjacents (260, 280) et le support de dispositif (370), la couverture de support de dispositif étant sélectionnée entre des couvertures configurées différemment et associées à des dispositifs différents.

17. Système modulaire de chemin de câbles selon la revendication 16, comportant en plus un élément définissant une boîte de sortie tenue dans le support de dispositif (370) et prévue entre le support de dispositif (370) et la couverture de support de dispositif (400) de manière à entourer et protéger des liaisons électriques vers le dispositif installé dans le support de dispositif (370).

18. Système modulaire de chemin de câbles selon la revendication 6, le moyen de couplage (100) hébergeant des joints de transition pour traverser un chemin de câbles transversal et/ou pour faire passer des câbles en provenance de et vers un tel chemin de câbles transversal.

19. Système modulaire de chemin de câbles selon la revendication 1, incluant en plus au moins un support de dispositif (370) pour soutenir un dispositif de sortie (250) de sorte que le dispositif de sortie (250) est prévu dans la surface allongée orientée vers le bas du composant de couverture en forme de L (400), le support de dispositif (370) incluant une enceinte protecteur (375) entourant le dispositif de sortie (250) de manière à isoler le dispositif de sortie (250) contre des câbles dans le passage de câbles B défini par le composant de couverture de chemin de câbles en forme de L (400) avec la surface orientée vers le bas.

20. Système modulaire de chemin de câbles selon la revendication 19, incluant en plus un deuxième composant de couverture en forme de L qui coopère avec le composant de couverture en forme de L (280) et le deuxième composant de couverture en forme de L (280) espacé longitudinalement du composant de couverture (280), un deuxième support de dispositif étant prévu entre les composants de couverture (280, 280) espacés.

21. Système modulaire de chemin de câbles selon la revendication 20, comportant en plus une enceinte (375) fixée au support de dispositif (370) pour isoler des câbles vers le dispositif de sortie (250) contre un deuxième passage de câbles allongé isolé dudit au moins un passage de câbles.

22. Système modulaire de chemin de câbles selon la revendication 19, incluant en plus des dispositifs de sortie supplémentaires prévus en relation espacée longitudinalement aux dispositifs de sortie (250) dans un composant de couverture en forme de L (400) qui comporte ladite surface orientée vers la bas, le composant de couverture en forme de L étant pré-câblé de sorte que les dispositifs de sortie (250) sont liés électriquement par des câbles prévus dans ledit au moins un passage de câbles.

23. Système modulaire de chemin de câbles selon la revendication 1, l'âme saillante (212) séparant les passages de câble supérieur et inférieur (A, B) de sorte que des câbles basse tension dans l'un des passages de câble supérieur et inférieur (A, B) sont isolés électriquement de câbles haute tension dans l'autre passage de câbles parmi les passages de câble supérieur et inférieur (A, B), l'âme saillante (212) ayant des ouvertures d'extraction espacées, un support de dispositif (370) monté dans le passage de câbles inférieur (B) pour soutenir au moins un dispositif de sortie (250) en relation visant vers le bas au passage de câbles inférieur (B), et une enceinte (375) montée au support de dispositif (370) à l'intérieur du passage de câbles inférieur (B) l'enceinte (375) isolant le dispositif de sortie (250) contre des câbles passant le long du passage de câbles inférieur (B), l'enceinte (375) et le support de dispositif (370) coopérant avec une ouverture d'extraction de manière à définir un passage enfermé pour héberger des câbles du passage de câbles supérieur (A) à travers ladite ouverture d'extraction diviseur afin de les raccorder au dispositif de sortie (250) orienté en relation visant vers le bas au passage de câbles inférieur (B).

24. Système modulaire de chemin de câbles selon la revendication 23, les couvertures de chemin de câbles inférieures étant espacées de manière à définir une lacune entre elles, le support de dispositif (370) étant prévu dans ladite lacune.

25. Système modulaire de chemin de câbles selon la revendication 24, incluant en plus une couverture de support de dispositif s'étendant au-dessus de la lacune entre les couvertures de chemin de câbles inférieures espacées.
